(19) Europäisches Patentamt / European Patent Office / Office européen des brevets

(11) **EP 2 910 443 A1**

(12) **EUROPEAN PATENT APPLICATION**
published in accordance with Art. 153(4) EPC

(43) Date of publication:
**26.08.2015 Bulletin 2015/35**

(51) Int Cl.:
**B60W 40/13** (2012.01)

(21) Application number: **12886592.0**

(22) Date of filing: **16.10.2012**

(86) International application number:
**PCT/JP2012/076730**

(87) International publication number:
**WO 2014/061108 (24.04.2014 Gazette 2014/17)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Pioneer Corporation**
**Kawasaki-shi, Kanagawa 212-0031 (JP)**

(72) Inventor: **KATO, Masahiro**
**Kawasaki-shi**
**Kanagawa 212-0031 (JP)**

(74) Representative: **Grünecker Patent- und**
**Rechtsanwälte**
**PartG mbB**
**Leopoldstraße 4**
**80802 München (DE)**

(54) **CENTROID ESTIMATION DEVICE AND CENTROID ESTIMATION METHOD**

(57) While keeping the sum of torques for all four driving wheels constant, a torque control part (710) sequentially determines torque control values such that the rotational speed of a first selected driving wheel pair ($WH_{FL}$, $WH_{RL}$), the rotational speed of a second selected driving wheel pair ($WH_{FL}$, $WH_{RR}$), and the rotational speed of a third selected driving wheel pair ($WH_{FR}$, $WH_{RR}$) become the same. Then, a driving force estimation part (720) estimates driving forces of the driving wheels on the basis of the determined torque control values. Subsequently, a centroid estimation part (750) calculates ratio ($k_{d1}$) (= ($F_{d,FR}/F_{d,RR}$)$k_{d3}$), ratio ($k_{d2}$) (= ($F_{d,RL}/F_{d,FL}$)), and ratio ($k_{d3}$) (= ($F_{d,RR}/F_{d,FL}$)) of the driving forces from information about the correlation among the driving forces of the first through third selected driving wheel pairs. Then, the centroid estimation part (750) estimates the centroid position of a moving body (MV) on the basis of the ratios ($k_{d1}$, $k_{d2}$, $k_{d3}$) of the relevant driving forces. Consequently, the centroid of the moving body can be estimated with a simple configuration without the provision of any special sensors.

Fig. 13

**Description**

TECHNICAL FIELD

The present invention relates to a centroid estimation device, to a centroid estimation method, to a centroid estimation program, and to a recording medium on which such a centroid estimation program is recorded.

BACKGROUND ART

For a moving vehicle that has a plurality of driving wheels, such as a four wheel vehicle or the like, from the standpoint of stability of the moving vehicle during driving, braking, steering, and so on, a device has been per se known from the past for performing stabilized motion control of the moving vehicle, according to the running state of the moving vehicle and the state of the road surface upon which it is traveling. Anti-slip control and direct yaw control and so on may be cited as types of control that are performed by a device of this sort.

For implementation of such anti-slip control or direct yaw control, it is necessary to acquire the position of the centroid of the moving vehicle. Moreover, while the slip ratios of the various driving wheels are very important variables during control of the motion of the moving vehicle, it is possible to perform slip ratio estimation by ascertaining the position of the centroid of the moving vehicle.

This position of the centroid of the moving vehicle can be derived if the vertical load upon each of the wheels of the moving vehicle is known. Thus, in order to acquire the vertical load upon each of the vehicle wheels, it is per se known, for example, to provide a load sensor to each of the vehicle wheels (see Patent Document #1, hereinafter, it is referred to as the "prior art example"). With the technique of this prior art example, it is arranged to detect the vertical load acting upon each of the wheels of the moving vehicle from the road surface upon which the moving vehicle is traveling, by using strain gauges or the like that are provided to the wheel shafts.

PRIOR ART DOCUMENT

PATENT DOCUMETS

Patent Document #1: Japanese Laid-Open Patent Publication 2006-138800.

SUMMARY OF INVENTION

PROBLEMS TO BE SOLVED BY THE INVENTION

With the prior art example described above, it is necessary to provide a load sensor to each of the wheels of the moving vehicle, in order directly to detect the vertical load upon that wheel. However, when this type of configuration is employed, it becomes necessary to perform specific design and assembly in order to attach these special sensors near the wheel shafts. As a result, the cost of manufacturing the moving vehicle can easily become high.

Due to this, it is desirable to find a technique with which it is possible to estimate the position of the centroid of a moving vehicle by estimating the vertical loads that are acting from the road surface upon each of the wheels of the moving vehicle, without providing any load sensors for directly detecting the vertical loads upon the vehicle wheels. This requirement is one of the problems which the present invention aims at solving.

The present invention has been conceived in consideration of the circumstances described above, and its object is to provide a novel centroid estimation device and centroid estimation method, which are capable of estimating the centroid of a moving vehicle without the provision of any special sensors, and with a simple structure.

MEANS FOR SOLVING THE PROBLEMS

When considered from a first aspect, the present invention is a centroid estimation device that estimates the centroid of a moving body having a plurality of driving wheels, comprising: a first acquisition part acquiring a mutual relationship information between the driving forces for said plurality of driving wheels, when the rotational speeds of said plurality of driving wheels become mutually equal; and a centroid estimation part configured to estimate the centroid of said moving body on the basis of the positional relationship of said plurality of driving wheels, and the mutual relationship information acquired by said first acquisition part.

Furthermore, when considered from a second aspect, the present invention is a centroid estimation method that estimates the centroid of a moving body having a plurality of driving wheels, comprising the steps of: an acquisition process of acquiring a mutual relationship information between the driving forces for said plurality of driving wheels, when the rotational speeds of said plurality of driving wheels become mutually equal; and a centroid estimation process of estimating the centroid of said moving body on the basis of the positional relationship of said plurality of driving wheels, and the mutual relationship information acquired by said acquisition process.

Moreover, when considered from a third aspect, the present invention is a centroid estimation program, wherein it causes a calculation part to execute the centroid estimation method of the present invention.

And, when considered from a fourth aspect, the present invention is a recording medium, wherein the centroid estimation program of the present invention is recorded thereupon in a form that can be read by a calculation part.

BRIEF DESCRIPTION OF THE DRAWINGS

Fig. 1 is a figure showing variables in a driving wheel model;
Fig. 2 is the figure showing a relationship between slip ratio and friction coefficient during driving;
Fig. 3 is the figure showing the relationship between slip ratio and friction coefficient during braking;
Fig. 4 is the figure for schematic explanation of torque distribution employed in an embodiment;
Fig. 5 is the figure for the explanation of a relationship between the positions at which four driving wheels are disposed and the position of the centroid of the moving vehicle;
Fig. 6 is the figure for the explanation of the theory of estimation of the position of the centroid in the longitudinal direction;
Fig. 7 is the figure for the explanation of the theory of estimation of the position of the centroid in the transverse direction;
Fig. 8 is the figure for the explanation of the theory of estimation of the position of the centroid in the vertical direction;
Fig. 9 is the figure for the explanation of the ratio between friction coefficient and slip ratio in a stable region during driving;
Fig. 10 is the figure for the explanation of the ratio between friction coefficient and slip ratio in the stable region during braking;
Fig. 11 is the figure for the explanation of the ratio between friction coefficient and slip ratio in an unstable region during driving;
Fig. 12 is the figure for the explanation of the ratio between friction coefficient and slip ratio in the unstable region during braking;
Fig. 13 is the block diagram for the explanation of the configuration of a centroid estimation device according to the embodiment of the present invention;
Fig. 14 is a block diagram for schematic explanation of the configuration of a centroid estimation device according to an example of the present invention;
Fig. 15 is a flow chart for the explanation of "processing for estimation of the position of the centroid of the moving vehicle, and slip ratio estimation processing employing the result of this centroid position estimation" by the device of Fig. 14;
Fig. 16 is the flow chart for the explanation of "processing for estimating the positions of the centroid in the longitudinal direction and in the transverse direction" in Fig. 15;
Fig. 17 is the flow chart for the explanation of "processing for deriving the driving forces when the rotational speeds become equal" in Fig. 16;
Fig. 18 is the figure for the explanation of processing for deriving the driving forces when the rotational speeds become equal; and
Fig. 19 is the flow chart for the explanation of "centroid height estimation processing" of Fig. 15.

EXPLANATION OF LETTERS OR NUMBERS

[0014]

100 ... Centroid estimation device
110 ... Control unit (torque control part, driving force estimation part, first acquisition part, second acquisition part, and centroid estimation part)
700 ... Centroid estimation device
710 ... Torque control part
720 ... Driving force estimation part
730 ... First acquisition part
740 ... Second acquisition part

750 ... Centroid estimation part

EMBODIMENTS FOR CARRYING OUT THE INVENTION

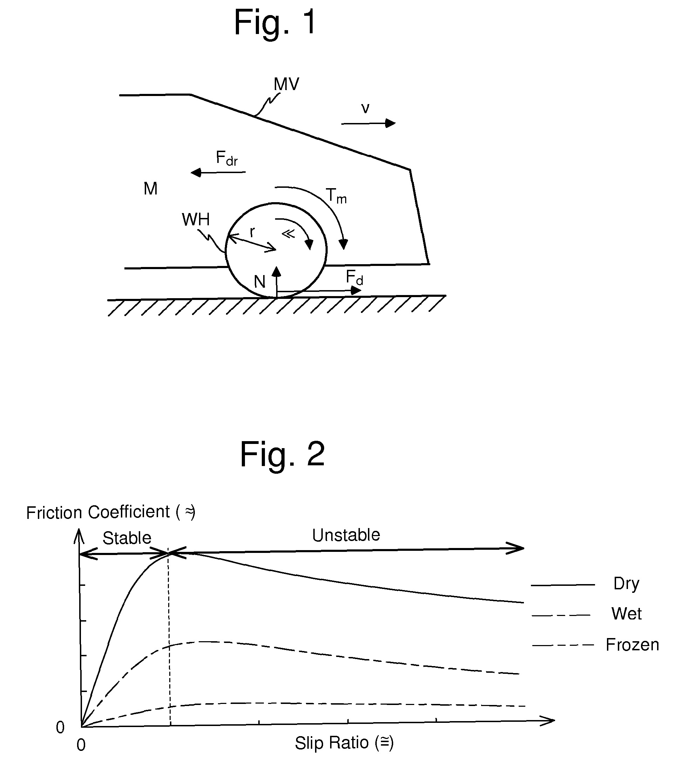

In the following, an embodiment of the present invention will be explained with reference to Figs. 1 through 13. Note that, in the following explanation and drawings, the same reference symbols are appended to elements that are the same or equivalent, and duplicate explanation will be omitted.

[Theory of the method of centroid estimation]

Firstly, the theory of the method of centroid estimation employed in this embodiment will be explained.

The variables in a driving wheel model of a driving wheel WH that is included in a moving vehicle MV are shown in Fig. 1. In Fig. 1, "M" is the apportioned mass borne by the driving wheel WH, "$F_d$" is the driving force for the driving wheel WH, and "$F_{dr}$" is the apportioned traveling resistance acting upon the driving wheel WH. Moreover, "$T_m$" is the torque upon the driving wheel WH, "v" is the speed of the moving vehicle MV (in other words, the translational speed of the driving wheel WH), and "$\omega$" is the rotational speed of the driving wheel WH. Yet further, "N" is the normal reaction force acting upon the driving wheel WH, while "r" is the radius of the driving wheel WH.

In the driving wheel model shown in Fig. 1, the equation of motion of the moving vehicle MV is given by the following Equation (1):

$$M \cdot (dv/dt) = F_d - F_{dr} \ \dots \ (1)$$

Moreover, if the moment of inertia of the driving wheel WH is termed "$J_W$", then the equation of motion of the driving wheel WH is given by the following Equation (2):

$$J_w \cdot (d\omega/dt) = T_m - r \cdot F_d \ \dots \ (2)$$

And, if the coefficient of friction between the driving wheel WH and the road surface is termed "$\mu$", then the relationship between the driving force $F_d$ and the normal reaction force N is given by the following Equation (3):

$$\mu = F_d \ / \ N \ \dots \ (3)$$

Here, the driving force $F_d$ can be acquired rapidly and with good accuracy by a per se known driving force observer on the basis of the torque $T_m$ and the rotational speed $\omega$. Note that a driving force observer is described in, for example, Japanese Laid-Open Patent Publication 2010-051160 or the like.

Now, in the driving wheel model described above, the slip ratio $\lambda$ is given by the following Equation (4):

$$\lambda = (r \cdot \omega - v) \ / \ Max(r \cdot \omega, v) \ \dots \ (4)$$

Here, Max(r·ω, v) means the one of (r·ω) and v that has the larger numerical value. During driving, since (r·ω) is greater than v, accordingly Max(r·ω, v) = r·ω On the other hand, during braking, since v is greater than (r·ω), accordingly Max(r·ω, v) = v.

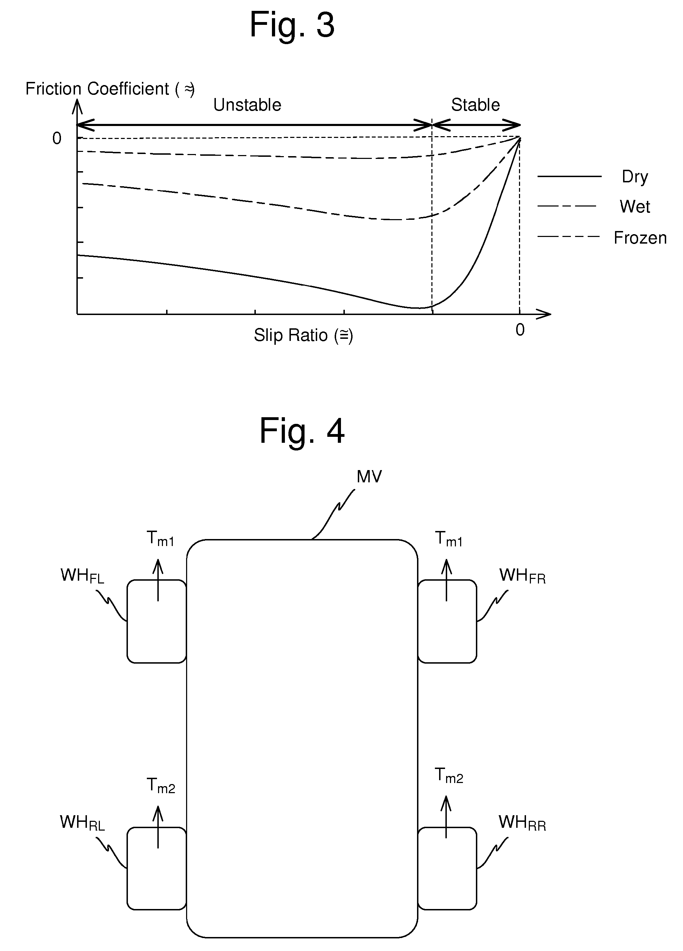

In the driving wheel model described above, generally, during driving, the relationships shown in Fig. 2 hold between the friction coefficient $\mu$ and the slip ratio $\lambda$; and moreover, during braking, the relationships shown in Fig. 3 hold. Note that, in the change of the friction coefficient $\mu$ along with increase of the slip ratio during driving shown in Fig. 2, states in which the slip ratio is less than or equal to its value at which the friction coefficient $\mu$ becomes maximum are states in which the moving vehicle MV can travel in a stable manner (hereinafter termed "stable states"). On the other hand, states in which the slip ratio is greater than its value at which the friction coefficient $\mu$ becomes maximum are states in which the phenomena of free spinning or of locking of the driving wheel WH occur (hereinafter termed "unstable states"). In the following, the region in which the state is stable will be termed the "stable region", while the region in which the state is unstable will be termed the "unstable region".

Moreover, in the change of the friction coefficient $\mu$ along with increase of the slip ratio during braking shown in Fig. 3, states in which the slip ratio is greater than or equal to its value at which the friction coefficient $\mu$ becomes

minimum are stable states. On the other hand, states in which the slip ratio is less than its value at which the friction coefficient $\mu$ becomes minimum are unstable states.

The estimation of the position of the centroid of the moving vehicle MV employed in this embodiment is performed when the running state of the moving vehicle MV is the stable state. Moreover, in the estimation of the position of the centroid of the moving vehicle MV employed in this embodiment, in the case of a moving vehicle MV in which it is possible to control a plurality of driving wheels independently, as for example an in-wheel motor type electric automobile, torque control values are determined so that the rotational speeds of at least two of the driving wheels, among the plurality of driving wheels, become equal to one another, while still keeping the total of the torque amounts for all of the plurality of driving wheels the same.

In the following, the theory will be explained of the estimation of the position of the centroid of a moving vehicle MV, in which four driving wheels, i.e. a front left side driving wheel $WH_{FL}$ (hereinafter also sometimes simply referred to as the "driving wheel $WH_{FL}$"), a front right side driving wheel $WH_{FR}$ (hereinafter also sometimes simply referred to as the "driving wheel $WH_{FR}$"), a rear left side driving wheel $WH_{RL}$ (hereinafter also sometimes simply referred to as the "driving wheel $WH_{RL}$"), and a rear right side driving wheel $WH_{RR}$ (hereinafter also sometimes simply referred to as the "driving wheel $WH_{RR}$"), are driven by respectively corresponding individual electric motors, and in which it is possible to drive those four driving wheels mutually independently.

«The theory of estimation of the positions of the centroid of the moving vehicle MV in the longitudinal direction and in the transverse direction»

Firstly, the theory of estimation of the positions of the centroid of the moving vehicle MV in the longitudinal direction and in the transverse direction will be explained.

While the position of the centroid of the moving vehicle MV is constant in terms of the vehicle itself, if a different set of passengers are riding in the vehicle, or if a different load is loaded, then deviation may occur in the position of the centroid in the longitudinal direction and/or in the transverse direction. And, if the position of the centroid deviates, then the vertical loads upon the various driving wheels will become different. Due to this, when the same motor torques are applied to the four driving wheels ($WH_{FL}$, $WH_{FR}$, $WH_{RL}$, and $WH_{RR}$), then differences in the normal reaction forces will occur due to the fact that the load imposed upon each of the driving wheels is different, and as a result the driving forces for the various driving wheels will become different. This phenomenon can be explained from Equation (3): during travel upon a road surface having some coefficient of friction $\mu$, the driving force $F_d$ becomes greater the greater is the normal reaction force N, and similarly the driving force $F_d$ becomes smaller the smaller is the normal reaction force N.

The estimation of the positions of the centroid of the moving vehicle MV in the longitudinal direction and in the transverse direction is performed according to the following procedure.

As schematically shown in Fig. 4, the motor torque amounts (torque amounts) supplied to the two front side driving wheels $WH_{FL}$ and $WH_{FR}$ are termed $T_{m1}$, while the motor torque amounts (torque amounts) supplied to the two rear side driving wheels $WH_{RL}$ and $WH_{RR}$ are termed $T_{m2}$. If the loads imposed upon the driving wheels $WH_{FL}$, $WH_{FR}$, $WH_{RL}$, and $WH_{RR}$ are respectively termed $W_{FL}$, $W_{FR}$, $W_{RL}$, and $W_{RR}$, then the normal reaction forces that act upon the driving wheels $WH_{FL}$, $WH_{FR}$, $WH_{RL}$, and $WH_{RR}$ become $N_{FL}= g \cdot W_{FL}$, $N_{FR}=g \cdot W_{FR}$, $N_{RL}=g \cdot W_{RL}$, and $N_{RR}=g \cdot W_{RR}$ respectively. Here "g" is the value of gravitational acceleration.

The distribution of the motor torque amounts $T_{m1}$ and $T_{m2}$ may change while the condition that the total torque amount $T_m$ ($=2 \cdot T_{m1}+2 \cdot T_{m2}$) is kept constant is upheld. For example, when the torque distribution of the motor torque amounts $T_{m1}$ and $T_{m2}$ is changed and the rotational speeds $\omega_{FL}$ and $\omega_{RL}$ become equal, since the speed v is the same, accordingly, from Equation (4) given above, the slip ratios $\lambda_{FL}$ and $\lambda_{RL}$ become equal to one another. As will be understood from Fig. 2 and Fig. 3, when the road surface state for the driving wheel $WH_{FL}$ and the road surface state for the driving wheel $WH_{RL}$ are the same, because if the slip ratios $\lambda$ are the same the friction coefficients $\mu$ also become the same. Accordingly the friction coefficients $\mu_{FL}$ and $\mu_{RL}$ become equal to one another. Therefore, at this time, from Equation (3) given above, the relationship of the following Equation (5) holds:

$$F_{d,FL} \,/\, N_{FL} = F_{d,RL} \,/\, N_{RL} \ \dots \ (5)$$

Then, from the relationships "$N_{FL}=g \cdot W_{FL}$, $N_{FR}=g \cdot W_{FR}$" given above, when as in Equation (5) above $F_{d,FL}/N_{FL}=F_{d,RL}/N_{RL}$, the load $W_{RL}$ can be expressed as the following Equation (6):

$$W_{RL} = (F_{d,RL} \,/\, F_{d,FL}) \cdot W_{FL} \ \dots \ (6)$$

Here, when

$$k_{d2} = (F_{d,RL} / F_{d,FL}) \ldots (7)$$

is substituted, Equation (6) can be expressed as the following Equation (8):

$$W_{RL} = k_{d2} \cdot W_{FL} \ldots (8)$$

Moreover when, under the condition that the total torque amount $T_m$ is kept constant, the distribution of the motor torque amounts $T_{m1}$ and $T_{m2}$ is changed and the rotational speeds $\omega_{FL}$ and $\omega_{RR}$ become equal, since the speed v is the same, accordingly, from Equation (4) given above, the slip ratios $\lambda_{FL}$ and $\lambda_{RL}$ become equal to one another. As will be understood from Fig. 2 and Fig. 3, when the road surface state for the driving wheel $WH_{FL}$ and the road surface state for the driving wheel $WH_{RR}$ are the same, because if the slip ratios $\lambda$ are the same the friction coefficients $\mu$ also become the same. Accordingly the friction coefficients $\mu_{FL}$ and $\mu_{RR}$ become equal to one another. Therefore, at this time, from Equation (3) given above, and from the above described relationships "$N_{FL}=g \cdot W_{FL}$, $N_{RR}=g \cdot W_{RR}$", the load $W_{RR}$ can be expressed by the following Equation (9):

$$W_{RR} = (F_{d,RR} / F_{d,FL}) \cdot W_{FL} \ldots (9)$$

Here, when

$$k_{d3} = (F_{d,RR} / F_{d,FL}) \ldots (10)$$

is substituted, Equation (9) can be expressed as the following Equation (11):

$$W_{RR} = k_{d3} \cdot W_{FL} \ldots (11)$$

Yet further when, under the condition that the total torque amount $T_m$ is kept constant, the distribution of the motor torque amounts $T_{m1}$ and $T_{m2}$ is changed and the rotational speeds $\omega_{FR}$ and $\omega_{RR}$ become equal, since the speed v is the same, accordingly, from Equation (4) given above, the slip ratios $\lambda_{FR}$ and $\lambda_{RR}$ become equal to one another. As will be understood from Fig. 2 and Fig. 3, when the road surface state for the driving wheel $WH_{FR}$ and the road surface state for the driving wheel $WH_{RR}$ are the same, because if the slip ratios $\lambda$ are the same the friction coefficients $\mu$ also become the same. Accordingly the friction coefficients $\mu_{FR}$ and $\mu_{RR}$ become equal to one another. Therefore, at this time, from Equation (3) given above, from the above described relationships "$N_{FR}=g \cdot W_{FR}$, $N_{RR}=g \cdot W_{RR}$", and from Equation (11), the load $W_{FR}$ can be expressed by the following Equation (12):

$$W_{FR} = (F_{d,FR} / F_{d,RR}) \cdot W_{RR}$$
$$= (F_{d,FR} / F_{d,RR}) \cdot k_{d3} \cdot W_{FL} \ldots (12)$$

Here, when

$$k_{d1} = (F_{d,FR} / F_{d,RR}) \cdot k_{d3} \ldots (13)$$

is substituted, Equation (12) can be expressed as the following Equation (14):

$$W_{FR} = k_{d1} \cdot W_{FL} \ldots (14)$$

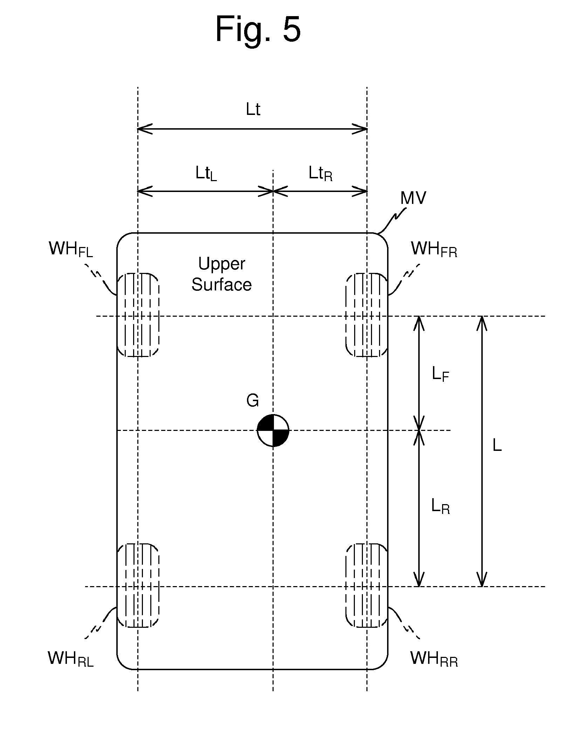

The relationship between the positions in which the driving wheels $WH_{FL}$, $WH_{FR}$, $WH_{RL}$, and $WH_{RR}$ are arranged and the position of the centroid G of the moving vehicle MV is shown in Fig. 5. Here, "L" shown in Fig. 5 is the gap between the two front side driving wheels $WH_{FL}$ and $WH_{FR}$ (sometimes hereinafter simply referred to as the "front side driving wheels") and the two rear side driving wheels $WH_{RL}$ and $WH_{RR}$ (sometimes hereinafter simply referred to as the "rear side driving wheels"). "$L_F$" is the distance from the position of the centroid G along the longitudinal direction of the moving vehicle MV to the front side driving wheels, while "$L_R$" is the distance from the position of the centroid G along the longitudinal direction of the moving vehicle MV to the rear side driving wheels. Moreover, "Lt" shown in Fig. 5 is the gap (i.e. the tread width) between the two left side driving wheels $WH_{FL}$ and $WH_{RL}$ (sometimes hereinafter simply referred to as the "left side driving wheels") and the two right side driving wheels $WH_{FR}$ and $WH_{RR}$ (sometimes hereinafter simply referred to as the "right side driving wheels"). "$Lt_L$" is the distance from the position of the centroid G along the transverse direction of the moving vehicle MV to the left side driving wheels, while "$Lt_R$" is the distance from the position of the centroid G along the transverse direction of the moving vehicle MV to the right side driving wheels.

(Estimation of the position of the centroid of the moving vehicle MV in the longitudinal direction)

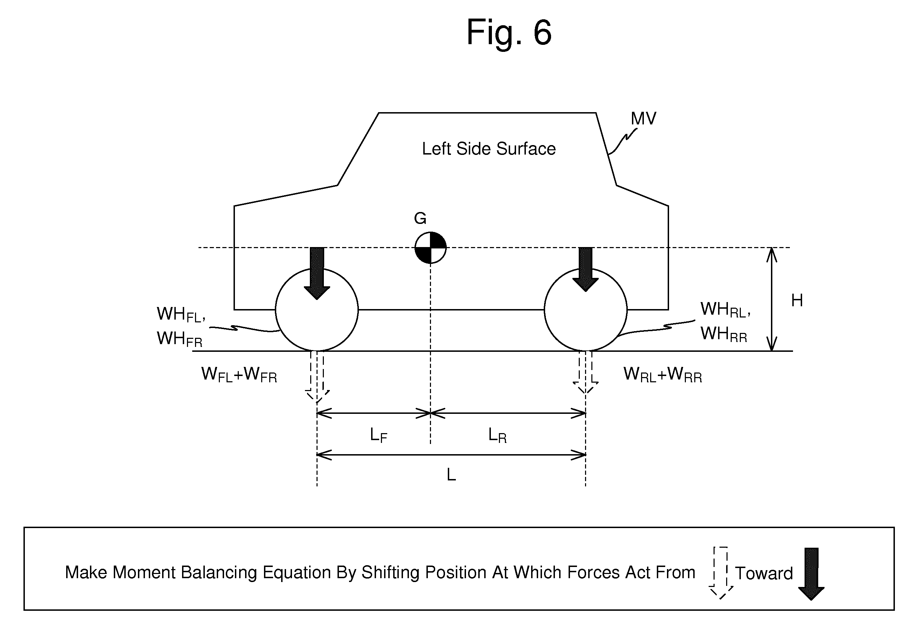

When the moving vehicle MV is traveling at a constant speed upon a flat road surface that is almost parallel to the horizontal plane, then the relationship between the total load "$W_{FL}+W_{FR}$" imposed upon the front side driving wheels $WH_{FL}$ and $WH_{FR}$ and the total load "$W_{RL}+W_{RR}$" imposed upon the rear side driving wheels $WH_{RL}$ and $WH_{RR}$ becomes as shown in Fig. 6.

From Fig. 6, the balance of the rotational moments of the forces acting around the position in the longitudinal direction of the centroid of the moving vehicle MV is given by the following Equation (15):

$$(W_{FL}+W_{FR}) \cdot g \cdot L_F = (W_{RL}+W_{RR}) \cdot g \cdot L_R \ ... \ (15)$$

Here, when the relationship "$L=L_F+L_R$" is substituted into Equation (15), the lengths $L_F$ and $L_R$ are given by the following Equations (16) and (17) respectively:

$$L_F = (W_{RL}+W_{RR}) / (W_{FL}+W_{FR}+W_{RL}+W_{RR}) \cdot L \ ... \ (16)$$

$$L_R = (W_{FL}+W_{FR}) / (W_{FL}+W_{FR}+W_{RL}+W_{RR}) \cdot L \ ... \ (17)$$

And, when the loads $W_{RL}$, $W_{RR}$, and $W_{FR}$ given by Equations (8), (11), and (14) described above are substituted into Equations (16) and (17), the lengths $L_F$ and $L_R$ are respectively given by the following Equations (18) and (19):

[Formula #1]

$$L_F = \frac{k_{d2} W_{FL} + k_{d3} W_{FL}}{W_{FL} + k_{d1} W_{FL} + k_{d2} W_{FL} + k_{d3} W_{FL}} L = \frac{k_{d2} + k_{d3}}{1 + k_{d1} + k_{d2} + k_{d3}} L \quad \cdots(18)$$

[Formula #2]

$$L_R = \frac{W_{FL} + k_{d1} W_{FL}}{W_{FL} + k_{d1} W_{FL} + k_{d2} W_{FL} + k_{d3} W_{FL}} L = \frac{1 + k_{d1}}{1 + k_{d1} + k_{d2} + k_{d3}} L \quad \cdots(19)$$

(Estimation of the position of the centroid of the moving vehicle MV in the transverse direction)

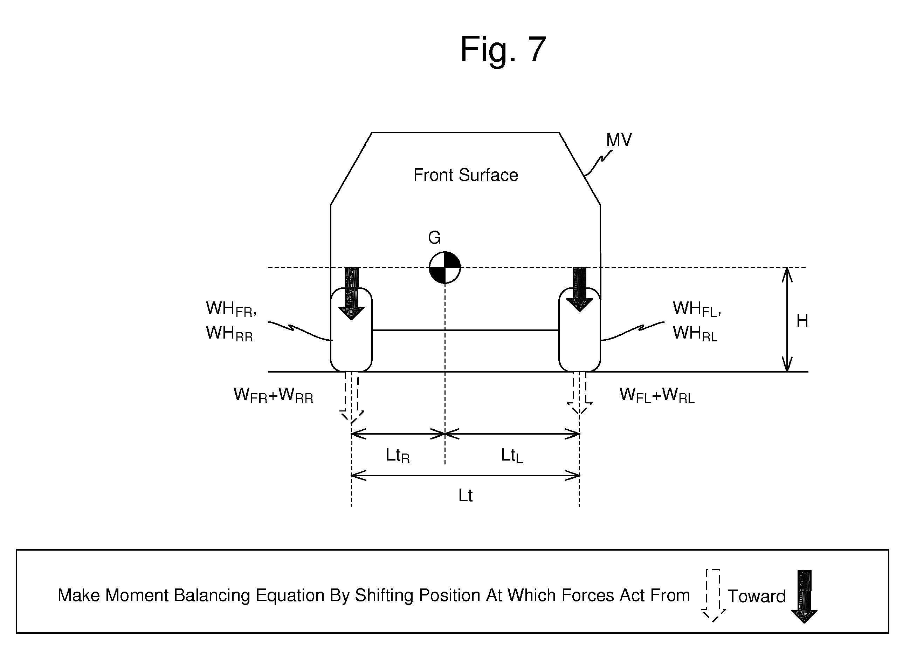

When the moving vehicle MV is traveling upon a flat road surface that is almost parallel to the horizontal plane, the relationship between the total load "$W_{FL}+W_{RL}$" imposed upon the left side driving wheels $WH_{FL}$ and $WH_{RL}$ and the total load "$W_{FR}+W_{RR}$" imposed upon the right side driving wheels $WH_{FR}$ and $WH_{RR}$ becomes as shown in Fig. 7.

From Fig. 7, the balance of the rotational moments of the forces acting around the position in the transverse direction of the centroid of the moving vehicle MV is given by the following Equation (20):

$$(W_{FL}+W_{RL}) \cdot g \cdot Lt_L = (W_{FR}+W_{RR}) \cdot g \cdot Lt_R \ ... \ (20)$$

Here, when the relationship "Lt=Lt$_L$+Lt$_R$" and the loads W$_{RL}$, W$_{RR}$, and W$_{FR}$ given by Equations (8), (11), and (14) described above are substituted into Equation (20), the lengths Lt$_L$ and Lt$_R$ are given by the following Equations (21) and (22) respectively:

[Formula #3]

$$Lt_L = \frac{k_{d1}W_{FL} + k_{d3}W_{FL}}{W_{FL} + k_{d1}W_{FL} + k_{d2}W_{FL} + k_{d3}W_{FL}}Lt = \frac{k_{d1} + k_{d3}}{1 + k_{d1} + k_{d2} + k_{d3}}Lt \quad \cdots (21)$$

[Formula #4]

$$Lt_R = \frac{W_{FL} + k_{d2}W_{FL}}{W_{FL} + k_{d1}W_{FL} + k_{d2}W_{FL} + k_{d3}W_{FL}}Lt = \frac{1 + k_{d2}}{1 + k_{d1} + k_{d2} + k_{d3}}Lt \quad \cdots (22)$$

Accordingly, when the moving vehicle MV is traveling at constant speed upon a flat road surface that is almost parallel to the horizontal plane, by controlling the motor torque amounts for the driving wheels WH$_{FL}$, WH$_{FR}$, WH$_{RL}$, and WH$_{RR}$, and by using the ratios k$_{d1}$, k$_{d2}$, and k$_{d3}$ of the driving forces when the rotational speeds of combinations of the driving wheels agree with one another, it is possible to estimate the lengths L$_F$ and L$_R$ related to the position in the longitudinal direction of the centroid of the moving vehicle MV, and the lengths Lt$_L$ and Lt$_R$ related to the position in the transverse direction of the centroid, according to Equations (18) and (19), and Equations (21) and (22). In other words, since no load shifting occurs while the moving vehicle MV is traveling at constant speed upon a flat road surface, it is possible to obtain the position of the centroid by doing as described above, and by employing the ratios k$_{d1}$, k$_{d2}$, and k$_{d3}$ of the driving forces that are calculated while changing the distribution of motor torques to the driving wheels.

«The theory of estimation of the position of the centroid of the moving vehicle MV in the vertical direction»

Next, the theory of estimation of the position of the centroid of the moving vehicle MV in the vertical direction will be explained.

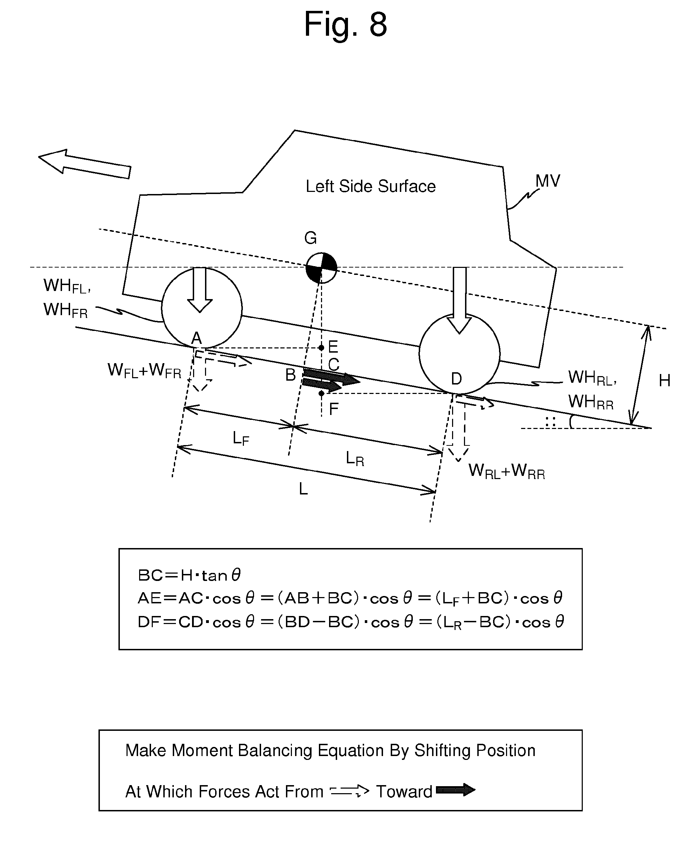

When the moving vehicle MV is traveling at an acceleration $\alpha$ upon a road surface that is inclined at an angle of slope $\theta$, the relationship between the total load "W$_{FL}$+W$_{FR}$" imposed upon the front side driving wheels WH$_{FL}$ and WH$_{FR}$ and the total load "W$_{RL}$+W$_{RR}$" imposed upon the rear side driving wheels WH$_{RL}$ and WH$_{RR}$ becomes as shown in Fig. 8.

From Fig. 8, when the height of the centroid of the moving vehicle MV from the road surface is termed "H" and the value of the gravitational acceleration is termed "g", the balance of the moments acting around the centroid of the moving vehicle MV is given by the following Equation (23):

$$(W_{FL}+W_{FR}) \cdot \alpha \cdot H + (W_{RL}+W_{RR}) \cdot \alpha \cdot H$$

$$= (W_{RL}+W_{RR}) \cdot g \cdot (L_R\text{-}H \cdot \tan\theta) \cdot \cos\theta$$

$$- (W_{FL}+W_{FR}) \cdot g \cdot (L_f+H \cdot \tan\theta) \cdot \cos\theta \dots (23)$$

From this Equation (23), the height H of the centroid of the moving vehicle MV is given by the following Equation (24):

[Formula #5]

$$H = \frac{(W_{RL} + W_{RR})L_R - (W_{FL} + W_{FR})L_F}{(W_{FL} + W_{FR} + W_{RL} + W_{RR})\left(\dfrac{\alpha}{g\cos\theta} + \tan\theta\right)} \quad \cdots (24)$$

Here, when the distribution of the motor torque amounts T$_{m1}$ and T$_{m2}$ is varied while the angle of slope $\theta$ is constant and also the acceleration $\alpha$ is constant, and if (F$_{d,RL}$/F$_{d,FL}$) when the rotational speeds $\omega_{FL}$ and $\omega_{RL}$ become equal is written as k$_{d2}$, then the relationship "W$_{RL}$=k$_{d2}$·W$_{FL}$" (i.e. Equation (8) above) is obtained.

Moreover, when the distribution of the motor torque amounts T$_{m1}$ and T$_{m2}$ is varied while the angle of slope $\theta$ is constant and also the acceleration $\alpha$ is constant, and if (F$_{d,RR}$/F$_{d,FL}$) when the rotational speeds $\omega_{FL}$ and $\omega_{RR}$ become

equal is written as $k_{d3}$, then the relationship "$W_{RR}=k_{d3}\cdot W_{FL}$" (i.e. Equation (11) above) is obtained. Yet further, when the distribution of the motor torque amounts $T_{m1}$ and $T_{m2}$ is varied while the angle of slope $\theta$ is constant and also the acceleration $\alpha$ is constant, and if ($F_{d,FR}/F_{d,RR}$)$\cdot k_{d3}$ when the rotational speeds $\omega_{FR}$ and $\omega_{RR}$ become equal is written as $k_{d1}$, then the relationship "$W_{FR}=k_{d1}\cdot W_{FL}$" (i.e. Equation (14) above) is obtained.

And, when the loads $W_{RL}$, $W_{RR}$, and $W_{FR}$ given by the equations "$W_{RL}=k_{d2}\cdot W_{FL}$", "$W_{RR}=k_{d3}\cdot W_{FL}$", and "$W_{FR}=k_{d1}\cdot W_{FL}$" are substituted into Equation (24), then the height H of the centroid of the moving vehicle MV from the road surface is given by the following Equation (25):

[Formula #6]

$$H = \frac{\left(k_{d2}W_{FL}+k_{d3}W_{FL}\right)L_R - \left(W_{FL}+k_{d1}W_{FL}\right)L_F}{\left(W_{FL}+k_{d1}W_{FL}+k_{d2}W_{FL}+k_{d3}W_{FL}\right)\left(\dfrac{\alpha}{g\cos\theta}+\tan\theta\right)}$$

$$= \frac{\left(k_{d2}+k_{d3}\right)L_R - \left(1+k_{d1}\right)L_F}{\left(1+k_{d1}+k_{d2}+k_{d3}\right)\left(\dfrac{\alpha}{g\cos\theta}+\tan\theta\right)} \quad \cdots (25)$$

Accordingly, when the moving vehicle MV is traveling upon a road surface that is sloped at an angle, or when the moving vehicle MV is traveling while accelerating, it is possible to estimate the height H of the centroid of the moving vehicle MV from the road surface by controlling the motor torque amounts for the driving wheels $WH_{FL}$, $WH_{FR}$, $WH_{RL}$, and $WH_{RR}$, and by using the ratios $k_{d1}$, $k_{d2}$, and $k_{d3}$ of the driving forces when the rotational speeds of various combinations of the driving wheels agree with one another.

Although, while the moving vehicle MV is traveling at an acceleration upon a road surface that is sloped at an angle, shifting of the load of the moving vehicle MV occurs due to the angle of slope and/or the acceleration, since the amount of this shifting of the load is constant during traveling with the angle of slope $\theta$ and the acceleration $\alpha$ remaining constant, accordingly, as described above, it is possible to obtain the height H of the centroid by using the ratios $k_{d1}$, $k_{d2}$, and $k_{d3}$ of the driving forces that are calculated while changing the distribution of motor torques to the various driving wheels. Note that it is possible to obtain the height H of the centroid with Equation (25), if $\alpha$ is kept constant even though $\theta=0$, or if $\theta$ is kept constant even though $\alpha=0$.

Note that, when "$\alpha=0$" and also "$\theta=0$", then the denominator of Equation (25) becomes zero, so that it is not possible to calculate the height H of the centroid of the moving vehicle MV. And, although it is possible to calculate the height H of the centroid of the moving vehicle MV when either "$\alpha\neq0$" or when "$\theta\neq0$", nevertheless the denominator of Equation (25) becomes close to zero when the absolute value of $\alpha$ or of $\theta$ is small, so the reliability of the value that is calculated becomes low. Due to this, it is best to arrange to calculate the height H of the centroid of the moving vehicle MV using Equation (25) when either the absolute value of $\alpha$ is quite large, or the absolute value of $\theta$ is quite large.

In this embodiment, the normal reaction forces acting upon the driving wheels are estimated by taking advantage of the position of the centroid of the moving vehicle MV which is estimated as described above, without using any load sensors. And the slip ratios are estimated on the basis of the normal reaction forces that have been estimated as described above. In the following, a summary of the method for estimation of the normal reaction forces acting upon the driving wheels, and a summary of the method for estimation of the slip ratios, will be explained.

[Estimation of the normal reaction forces]

The method for estimation of the normal reaction forces acting upon each of the driving wheels of the moving vehicle MV will now be explained.

«Estimation of the normal reaction forces operating upon the driving wheels during traveling at constant speed upon a flat road surface»

If the weight of the moving vehicle MV is termed MM (=$W_{FL}+W_{FR}+W_{RL}+W_{RR}$), then, from Equations (8), (11), and (14) described above, the relationship given by the following Equation (26) holds:

$$W_{FL} + k_{d1}\cdot W_{FL} + k_{d2}\cdot W_{FL} + k_{d3}\cdot W_{FL} = MM \ \dots (26)$$

And, from Equation (26) and Equations (14), (8), and (11) described above, the loads $W_{FL}$, $W_{FR}$, $W_{RL}$, and $W_{RR}$ are given by the following Equations (27) through (30):

$$W_{FL} = (1 \, / \, (1+k_{d1}+k_{d2}+k_{d3})) \cdot MM \, ... \, (27)$$

$$W_{FR} = (k_{d1} \, / \, (1+k_{d1}+k_{d2}+k_{d3})) \cdot MM \, ... \, (28)$$

$$W_{RL} = (k_{d2} \, / \, (1+k_{d1}+k_{d2}+k_{d3})) \cdot MM \, ... \, (29)$$

$$W_{RR} = (k_{d3} \, / \, (1+k_{d1}+k_{d2}+k_{d3})) \cdot MM \, ... \, (30)$$

Accordingly, from these Equations (27) through (30) and the relationships "$N_{FL}=g \cdot W_{FL}$, $N_{FR}=g \cdot W_{FR}$, $N_{RL}=g \cdot W_{RL}$, and $N_{RR}=g \cdot W_{RR}$", the normal reaction forces $N_{FL}$, $N_{FR}$, $N_{RL}$, and $N_{RR}$ are given by the following Equations (31) through (34) respectively:

$$N_{FL} = (1 \, / \, (1+k_{d1}+k_{d2}+k_{d3})) \cdot MM \cdot g \, ... \, (31)$$

$$N_{FR} = (k_{d1} \, / \, (1+k_{d1}+k_{d2}+k_{d3})) \cdot MM \cdot g \, ... \, (32)$$

$$N_{RL} = (k_{d2} \, / \, (1+k_{d1}+k_{d2}+k_{d3})) \cdot MM \cdot g \, ... \, (33)$$

$$N_{RR} = (k_{d3} \, / \, (1+k_{d1}+k_{d2}+k_{d3})) \cdot MM \cdot g \, ... \, (34)$$

<<Estimation of the normal reaction forces operating upon the driving wheels during traveling at acceleration $\alpha$ upon a road surface inclined at an angle of slope $\theta$>>

If, when the moving vehicle MV is traveling at an acceleration $\alpha$ upon a road surface whose angle of slope is $\theta$, the sum of the loads imposed upon the front side driving wheels $WH_{FL}$ and $WH_{FR}$ is termed $W_F$ ($=W_{FL}+W_{FR}$), and the sum of the loads imposed upon the rear side driving wheels $WH_{RL}$ and $WH_{RR}$ is termed $W_R$($=W_{RL}+W_{RR}$), then Equation (23) described above becomes the following Equation (35):

$$W_F \cdot \alpha \cdot H + (MM-W_F) \cdot \alpha \cdot H$$
$$= (MM-W_F) \cdot g \cdot (L_R-H \cdot \tan\theta) \cdot \cos\theta$$
$$- W_F \cdot g \cdot (L_f+H \cdot \tan\theta) \cdot \cos\theta \, ... \, (35)$$

When this Equation (35) is rearranged, the load $W_F$ can be expressed by the following Equation (36):
[Formula #7]

$$W_F = \frac{-\alpha H + g(L_R - H \tan\theta)\cos\theta}{gL\cos\theta} MM \quad \cdots (36)$$

Moreover, from Equation (36) and the relationship "$W_R=MM-W_F$", the load $W_R$ can be expressed by the following Equation (37):
[Formula #8]

$$W_R = \frac{\alpha H + g\left(L_F + H \tan\theta\right)\cos\theta}{g\,L\cos\theta} MM \quad \cdots(37)$$

Here, the shifting of the load when the moving vehicle MV is traveling at an acceleration $\alpha$ upon a road surface whose angle of slope is $\theta$ is only in the longitudinal direction, and no shifting of the load takes place in the transverse direction. Due to this, the above described relationship "$W_{FR}=k_{d1}\cdot W_{FL}$" (i.e. Equation (14)) and the above described relationship "$W_{RR}=k_{d3}\cdot W_{FL}=k_{d3}\cdot (W_{RL}/k_{d2})=(k_{d3}/k_{d2})\cdot W_{RL}$" (i.e. Equations (11) and (8)) are maintained.

Due to this, from the relationship "$W_{FR}=k_{d1}\cdot W_{FL}$", the relationship of the following Equation (38) becomes valid for the load $W_F$:

$$W_F = W_{FL}+W_{FR} = W_{FL}+k_{d1}\cdot W_{FL} = (1+k_{d1})\cdot W_{FL} \;\ldots\; (38)$$

Accordingly, the loads $W_{FL}$ and $W_{FR}$ can be expressed by the following Equations (39) and (40) respectively:

$$W_{FL} = (1/(1+k_{d1}))\cdot W_F \;\ldots\; (39)$$

$$W_{FR} = W_F-W_{FL} = (k_{d1}/(1+k_{d1}))\cdot W_F \;\ldots\; (40)$$

Moreover, from the relationship "$W_{RR}=(k_{d3}/k_{d2})\cdot W_{RL}$", the relationship of the following Equation (41) becomes valid for the load $W_R$:

$$W_R = W_{RL}+W_{RR} = W_{RL}+(k_{d3}/k_{d2})\cdot W_{RL}$$
$$= (1+(k_{d3}/k_{d2}))\cdot W_{RL} \;\ldots\; (41)$$

Accordingly, the loads $W_{RL}$ and $W_{RR}$ may be expressed by the following Equations (42) and (43) respectively:

$$W_{RL} = (k_{d2}/(k_{d2}+k_{d3}))\cdot W_R \;\ldots\; (42)$$

$$W_{RR} = W_R-W_{RL} = (k_{d3}/(k_{d2}+k_{d3}))\cdot W_R \;\ldots\; (43)$$

Accordingly, from these Equations (39), (40), (42), and (43), from Equations (36) and (37) described above, and from the relationships "$N_{FL}=g\cdot W_{FL}$, $N_{FR}=g\cdot W_{FR}$, $N_{RL}=g\cdot W_{RL}$, and $N_{RR}=g\cdot W_{RR}$", the normal reaction forces $N_{FL}$, $N_{FR}$, $N_{RL}$, and $N_{RR}$ are given by the following Equations (44) through (47) respectively. Note that it is still possible to obtain the normal reaction forces acting upon the driving wheels according to Equations (44) through (47), even if either one or the angle of slope $\theta$ or the acceleration $\alpha$ is zero.

[Formula #9]

$$N_{FL} = \frac{1}{1+k_{d1}}\frac{-\alpha H + g\left(L_R - H \tan\theta\right)\cos\theta}{g\,L\cos\theta} MM\cdot g \quad \cdots(44)$$

[Formula #10]

$$N_{FR} = \frac{k_{d1}}{1+k_{d1}}\frac{-\alpha H + g\left(L_R - H \tan\theta\right)\cos\theta}{g\,L\cos\theta} MM\cdot g \quad \cdots(45)$$

[Formula #11]

$$N_{RL} = \frac{k_{d2}}{k_{d2} + k_{d3}} \frac{\alpha H + g(L_F + H\tan\theta)\cos\theta}{gL\cos\theta} MM \cdot g \quad \cdots(46)$$

[Formula #12]

$$N_{RR} = \frac{k_{d3}}{k_{d2} + k_{d3}} \frac{\alpha H + g(L_F + H\tan\theta)\cos\theta}{gL\cos\theta} MM \cdot g \quad \cdots(47)$$

[Estimation of the slip ratios]

With the slip ratio estimation method employed in this embodiment, it is possible to obtain estimated values for the friction coefficients from Equation (3) described above, from the normal reaction forces acting upon the driving wheels estimated as described above, and from the driving forces for the driving wheels as estimated by a per se known driving force observer. And, from the frictional coefficients that have been estimated and the values of the rotational speeds of the motors, the slip ratios for the two driving wheels to which attention is directed are calculated as described below.

Note that it will be supposed that, among two of the driving wheels $WH_1$ and $WH_2$, the torque instruction value for the motor that drives the first driving wheel $WH_1$ is denoted by $T_{m1}$, while the torque instruction value for the motor that drives the second driving wheel $WH_2$ is denoted by $T_{m2}$. And it will be supposed that, for the first driving wheel $WH_1$, the rotational speed is "$\omega_1$" and the friction coefficient is "$\mu_1$". Moreover, summaries of the slip ratio estimation method during driving and during braking will be explained while supposing that, for the second driving wheel $WH_2$, the rotational speed is "$\omega_2$" and the friction coefficient is "$\mu_2$".

«Summary of the slip ratio estimation method during driving»

Since, during driving, the values ($r\cdot\omega_1$) and ($r\cdot\omega_2$) are greater than or equal to the speed v, accordingly, from Equation (4) given above, the slip ratios $\lambda_1$ and $\lambda_2$ are given by the following Equations (48) and (49):

$$\lambda_1 = (r\cdot\omega_1 - v) / r\cdot\omega_1 \dots (48)$$

$$\lambda_2 = (r\cdot\omega_2 - v) / r\cdot\omega_2 \dots (49)$$

And, since the speed v is common to Equation (48) and Equation (49), accordingly the relationship given by the following Equation (50) holds:

$$v = (1-\lambda_1)\cdot r\cdot\omega_1 = (1-\lambda_2)\cdot r\cdot\omega_2 \dots (50)$$

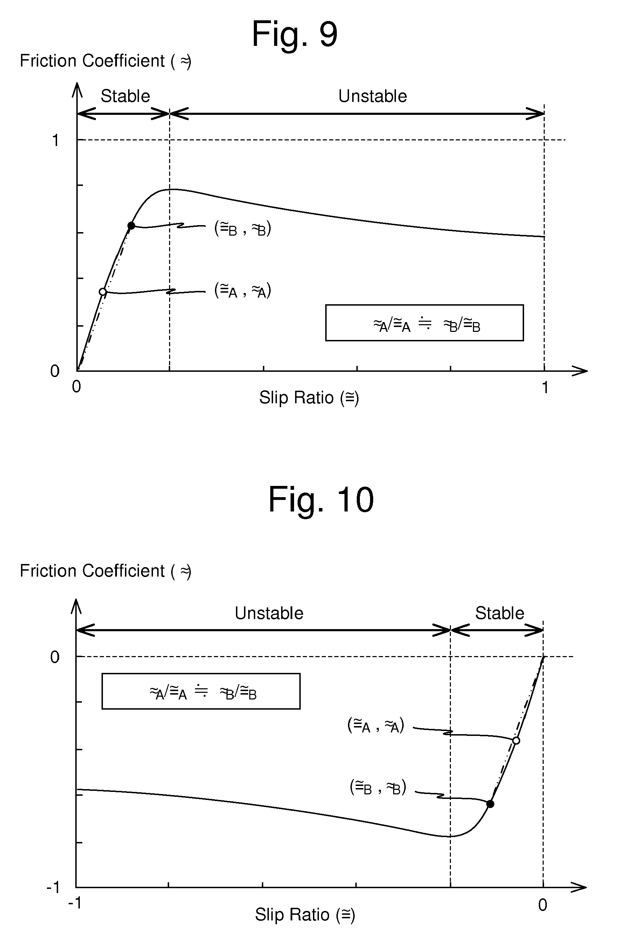

Now since, as shown in Figs. 2 and 3, the relationship between the friction coefficient $\mu$ and the slip ratio $\lambda$ changes according to the state of the road surface, accordingly the slip ratio $\lambda$ is not uniquely determined in terms of the friction coefficient $\mu$. However, in the stable regions, if the state of the road surface is the same, as in the examples for a dry road surface shown in Fig. 9 and Fig. 10, and if the difference between one slip ratio $\lambda_A$ and another slip ratio $\lambda_B$ is small, then the relationship between the slip ratio $\lambda$ and the friction coefficient $\mu$ given by the following Equation (51) approximately holds:

$$\mu_A / \lambda_A = \mu_B / \lambda_B \dots (51)$$

Here, the value $\mu_A$ is the friction coefficient corresponding to the slip ratio $\lambda_A$, and the value $\mu_B$ is the friction coefficient corresponding to the slip ratio $\lambda_B$. Note that the relationship of Equation (51) also holds for the stable regions in the case of a wet road surface and in the case of a freezing road surface, as will be apparent from the characteristics of a wet road surface and of a freezing road surface shown in Fig. 2 and Fig. 3, although these cases are not particularly shown in the figures.

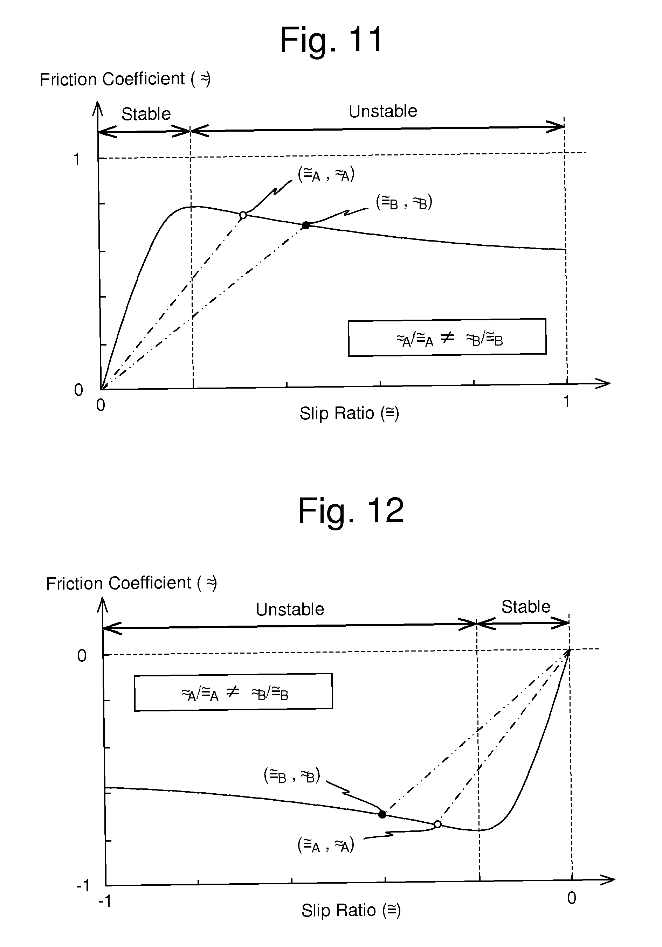

Moreover in the unstable regions, even if the state of the road surface is the same, as in the examples for a dry road surface shown in Fig. 11 and Fig. 12, and even if the difference between one slip ratio $\lambda_A$ and another slip ratio $\lambda_B$ is small, still the relationship between the slip ratio $\lambda$ and the friction coefficient $\mu$ given by Equation (51) described above does not hold. Note that, as will be understood from the characteristics of a wet road surface and of a freezing road surface shown in Fig. 2 and Fig. 3, the relationship of Equation (51) does not hold for the unstable regions in the case of a wet road surface and in the case of a freezing road surface either.

Due to this, it is possible to calculate the slip ratios $\lambda_1$ and $\lambda_2$ from Equations (50) and (51), according to the following Equations (52) and (53):

$$\lambda_1 = (\omega_2-\omega_1) / ((\mu_2/\mu_1)\cdot\omega_2-\omega_1) \ \dots \ (52)$$

$$\lambda_2 = (\omega_2-\omega_1) / (\omega_2-(\mu_1/\mu_2)\cdot\omega_1) \ \dots \ (53)$$

«Summary of the slip ratio estimation method during braking»

Moreover since, during braking, the values $(r\cdot\omega_1)$ and $(r\cdot\omega_2)$ are less than or equal to the speed v, accordingly, from Equation (4) given above, the slip ratios $\lambda_1$ and $\lambda_2$ are given by the following Equations (54) and (55):

$$\lambda_1 = (r\cdot\omega_1 - v) / v \ \dots \ (54)$$

$$\lambda_2 = (r\cdot\omega_2 - v) / v \ \dots \ (55)$$

Since the speed v is common to Equation (54) and Equation (55), accordingly the relationship given by the following Equation (56) holds:

$$v = r\cdot\omega_1 / (1+\lambda_1) = r\cdot\omega_2 / (1+\lambda_2) \ \dots \ (56)$$

Due to this, it is possible to calculate the slip ratios $\lambda_1$ and $\lambda_2$ from Equations (51) and (56), according to the following Equations (57) and (58):

$$\lambda_1 = (\omega_2-\omega_1) / ((\mu_2/\mu_1)\cdot\omega_1-\omega_2) \ \dots \ (57)$$

$$\lambda_2 = (\omega_2-\omega_1) / (\omega_1-(\mu_1/\mu_2)\cdot\omega_2) \ \dots \ (58)$$

[Configuration]

Next, the configuration of the centroid estimation device according to the embodiment will be explained.

Note that, in the embodiment, as shown in Fig. 4 and described above, the centroid of the moving vehicle MV is estimated by establishing a torque distribution in which the torque control values for the driving wheel $WH_{FL}$ and for the driving wheel $WH_{FR}$ are set to a torque control value $T_{m1}$, and moreover the torque control values for the driving wheel $WH_{RL}$ and for the driving wheel $WH_{RR}$ are set to a torque control value $T_{m2}$.

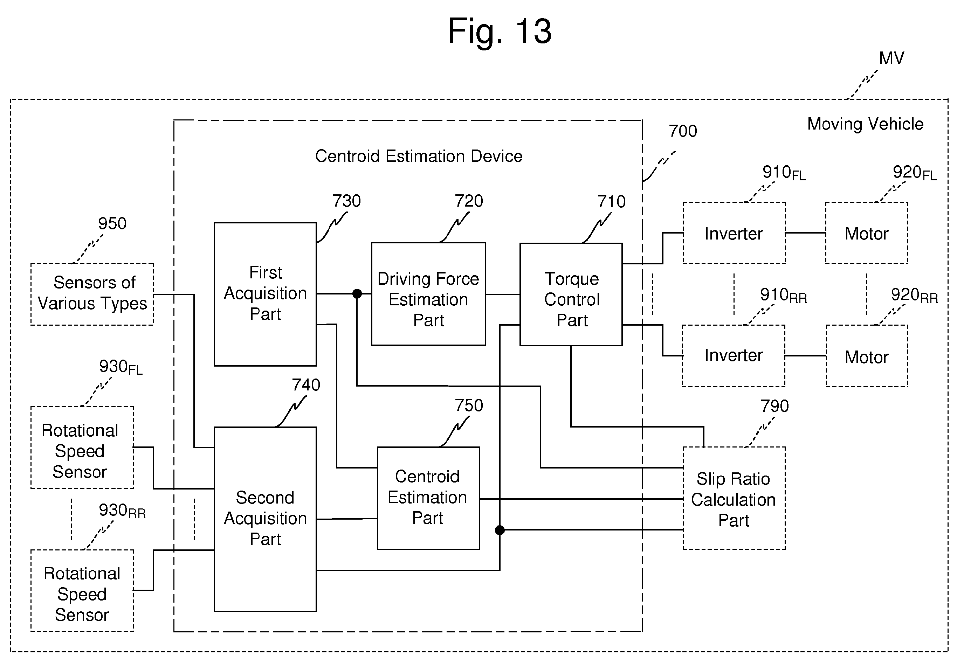

The schematic configuration of a centroid estimation device 700 according to the embodiment of the present invention is shown in Fig. 13. As shown in Fig. 13, this centroid estimation device 700 is installed to a moving vehicle MV in which each of four driving wheels, i.e. a front left side driving wheel $WH_{FL}$, a front right side driving wheel $WH_{FR}$, a rear left side driving wheel $WH_{RL}$, and a rear right side driving wheel $WH_{RR}$, is driven mutually independently by a corresponding electric motor, one such electric motor being installed to each of the four wheels.

Inverters $910_j$ (where j=FL, FR, RL, and RR), motors $920_j$, rotational speed sensors $930_j$, and various sensors 950 are mounted to the moving vehicle MV. Here, the inverters $910_j$, the motors $920_j$, and the rotational speed sensors $930_j$ are installed so as to correspond to each of the driving wheels $WH_j$.

Each of the inverters $910_j$ described above receives a torque creation signal sent from the centroid estimation device 700, corresponding to a torque instruction value. And each of the inverters $910_j$ generates a motor drive signal according to the abovementioned torque creation signal, and sends this motor drive signal that it has generated to its corresponding motor $920_j$.

Each of the motors $920_j$ described above receives the motor drive signal sent from its corresponding inverter $910_j$. And each of the motors $920_j$ performs motor rotational motion on the basis of this motor drive signal, and thereby rotates its driving wheel $WH_j$. Note that, if the motor drive signal is negative, then regeneration is performed so as to reduce the wheel rotational speed, so that the driving wheel $WH_j$ is braked.

Each of the rotational speed sensors $930_j$ described above detects the rotational speed $\omega_j$ of its corresponding driving wheel $WH_j$. And each of the rotational speed sensors $930_j$ sends this rotational speed $\omega_j$ that it has thus detected to the centroid estimation device 700.

The various sensors 950 described above include sensors that are employed for torque control and centroid estimation, such as an accelerator opening amount sensor, an acceleration sensor, an angular velocity sensor, a gyro sensor, and so on. The results of detection by these various sensors 950 are sent to the centroid estimation device 700.

<Configuration of the centroid estimation device 700>

Next, the configuration of the centroid estimation device 700 described above will be explained. As shown in Fig. 13, the centroid estimation device 700 comprises a torque control part 710, a driving force estimation part 720, a first acquisition part 730, a second acquisition part 740, and a centroid estimation part 750. Moreover, it should be understood that a slip ratio calculation part 790 is connected to the centroid estimation device 700.

The torque control part 710 described above determines torque control values for the four driving wheels $WH_{FL}$, $WH_{FR}$, $WH_{RL}$, and $WH_{RR}$, and controls the torque amounts for the four driving wheels $WH_{FL}$, $WH_{FR}$, $WH_{RL}$, and $WH_{RR}$ on the basis of these torque control values that have been determined. And, when the torque control part 710 has determined the torque control values, it generates torque creation signals on the basis of these torque control values that it has determined, and sends these torque creation signals that it has generated to the inverters $910_j$.

When performing estimation of the centroid of the moving vehicle MV, the torque control part 710 determines torque control values so as, while keeping the total of the torque amounts for all of the four driving wheels $WH_{FL}$, $WH_{FR}$, $WH_{RL}$, and $WH_{RR}$ the same, to make the rotational speeds of two of the driving wheels, among the four driving wheels, become equal to one another. The torque control values that have been determined by the torque control part 710 in this manner are sent to the driving force estimation part 720. Moreover, the torque control part 710 generates torque creation signals on the basis of the torque control values that have been determined in this manner, and sends these torque creation signals that have been generated to the inverters $910_j$.

In this embodiment, as the first control procedure for centroid estimation, the torque control part 710 selects the driving wheels $WH_{FL}$ and $WH_{RL}$ as being a pair of driving wheels whose rotational speeds are to be made equal (hereinafter this pair of driving wheels $WH_{FL}$ and $WH_{RL}$ may also be termed the "first selected driving wheel pair"). And, under the condition that the total torque amount $T_m$ is kept the same, the torque control part 710 determines torque control values $T_{m1}$ and $T_{m2}$ such that the rotational speeds $\omega_{FL}$ and $\omega_{RL}$ of these driving wheels $WH_{FL}$ and $WH_{RL}$ that have been selected become equal to one another. And the torque control part 710 sends these torque control values $T_{m1}$ and $T_{m2}$ that have thus been determined to the driving force estimation part 720.

Next, as the second control procedure for centroid estimation, the torque control part 710 selects the driving wheels $WH_{FL}$ and $WH_{RR}$ as being a pair of driving wheels whose rotational speeds are to be made equal (hereinafter this pair of driving wheels $WH_{FL}$ and $WH_{RR}$ may also be termed the "second selected driving wheel pair"). And, under the condition that the total torque amount $T_m$ is kept the same, the torque control part 710 determines torque control values $T_{m1}$ and $T_{m2}$ such that the rotational speeds $\omega_{FL}$ and $\omega_{RR}$ of these driving wheels $WH_{FL}$ and $WH_{RL}$ that have now been selected become equal to one another. And the torque control part 710 sends these torque control values $T_{m1}$ and $T_{m2}$ that have thus been determined to the driving force estimation part 720. Note that, even if the total torque amount $T_m$ that is inputted during this processing changes, still it is possible to perform centroid estimation without any problem by performing setting of the torque control values $T_{m1}$ and $T_{m2}$ by using their ratios with respect to the total torque amount $T_m$.

Next, as the third control procedure for centroid estimation, the torque control part 710 selects the driving wheels $WH_{FR}$ and $WH_{RR}$ as being a pair of driving wheels whose rotational speeds are to be made equal (hereinafter this pair of driving wheels $WH_{FR}$ and $WH_{RR}$ may also be termed the "third selected driving wheel pair"). And, under the condition that the total torque amount $T_m$ is kept the same, the torque control part 710 determines torque control values $T_{m1}$ and $T_{m2}$ such that the rotational speeds $\omega_{FR}$ and $\omega_{RR}$ of these driving wheels $WH_{FR}$ and $WH_{RR}$ that have been selected become equal to one another. And the torque control part 710 sends these torque control values $T_{m1}$ and $T_{m2}$ that have thus been determined to the driving force estimation part 720.

Note that the torque control part 710 is adapted to acquire the rotational speeds $\omega_j$ detected by the various rotational speed sensors $930_j$ via the second acquisition part 740, and to determine whether or not the rotational speeds of the selected pair of driving wheels are equal to one another.

Moreover, it would be acceptable for the speed v of the moving vehicle MV to be kept the same during the intervals in which each of the first, the second, and the third control procedure are executed; or, alternatively, it would also be acceptable for the speeds v of the moving vehicle MV not to be equal during the intervals when the first to the third control procedure are executed. This is because no shifting of the load takes place while the moving vehicle MV is traveling upon a flat road surface at a constant speed.

Moreover, during traction control, the torque control part 710 sends a slip ratio estimation instruction to the slip ratio calculation part 790. And during traction control, via the second acquisition part 740, the torque control part 710 receives the rotational speeds $\omega_j$ sent from the respective rotational speed sensors $930_j$ and the results of detection sent from the various sensors 950. Moreover, the torque control part 710 receives the slip ratios sent from the slip ratio calculation part 790, and the torque control part 710 determines torque instruction values $T_{mj}$ for traction control on the basis of the above rotational speeds $\omega_j$, the above detection results, and the above slip ratios.

Next, the torque control part 710 generates torque creation signals on the basis of the torque instruction values $T_{mj}$ that it has determined, and sends these torque creation signals that it has generated to the inverters $910_j$. Note that the torque control part 710 also sends the torque instruction values $T_{mj}$ that have been determined in this manner to the driving force estimation part 720.

The driving force estimation part 720 described above implements the function of the driving force observer described above. The driving force estimation part 720 receives the torque control values $T_{m1}$ and $T_{m2}$ for the selected driving wheel pair sent from the torque control part 710, and also the rotational speeds for that selected driving wheel pair. And by functioning as a driving force observer on the basis of the torque control values $T_{m1}$ and $T_{m2}$ and the rotational speeds, the driving force estimation part 720 estimates the driving forces of the selected pair of driving wheels. The values of the driving forces that have been estimated in this manner are sent to the first acquisition part 730.

Note that in this embodiment, during traction control, the driving force estimation part 720 sends the driving forces for the driving wheels, which it has estimated by functioning as a driving force observer, to the slip ratio calculation part 790.

As mutual relationship information between the driving forces for the four driving wheels, the first acquisition part 730 described above acquires the values of the driving forces $F_{d,FL}$ and $F_{d,RL}$ for the first selected pair of drive wheels, the values of the driving forces $F_{d,FL}$ and $F_{d,RR}$ for the second selected pair of drive wheels, and the values of the driving forces $F_{d,FR}$ and $F_{d,RR}$ for the third selected pair of drive wheels sent from the driving force estimation part 720. And the first acquisition part 730 sends this mutual relationship information for the driving forces for the four driving wheels to the centroid estimation part 750.

The second acquisition part 740 described above acquires running state information for the moving vehicle MV from the various sensors 950. Moreover, the second acquisition part 740 receives the rotational speeds $\omega_j$ sent from the rotational speed sensors $930_j$. And the second acquisition part 740 sends this running state information to the centroid estimation part 750. Furthermore, the second acquisition part 740 sends this running state information and the above-mentioned rotational speeds $\omega_j$ to the torque control part 710. Yet further, the second acquisition part 740 sends the abovementioned rotational speeds $\omega_j$ to the slip ratio calculation part 790.

The centroid estimation part 750 described above receives the mutual relationship information for the driving forces for the four driving wheels sent from the first acquisition part 730. Moreover, the centroid estimation part 750 receives the running state information for the moving vehicle MV sent from the second acquisition part 740. And when, on the basis of the running state information, the centroid estimation part 750 has determined that the moving vehicle MV is traveling at a constant speed upon a flat road surface that is almost parallel to the horizontal plane, then it calculates the lengths $L_F$ and $L_R$ from Equations (18) and (19) and so on given above, and also calculates the lengths $Lt_L$ and $Lt_R$ from Equations (21) and (22) and so on given above.

Furthermore when, on the basis of the running state information, the centroid estimation part 750 has determined that the moving vehicle MV is traveling at an acceleration $\alpha$ upon a road surface that slopes at an angle of slope $\theta$, or when it has determined that the moving vehicle MV is traveling at a constant speed upon a road surface that slopes at an angle of slope $\theta$, or when it has determined that the moving vehicle MV is traveling at an acceleration $\alpha$ upon a flat road surface that is almost parallel to the horizontal plane, then it calculates the height H of the centroid of the moving vehicle MV from Equation (25) and so on given above.

Yet further, on the basis of the information giving the position of the centroid and the total weight MM of the moving vehicle MV, and using Equations (31) through (34) given above or Equations (44) through (47) given above, the centroid estimation part 750 calculates the normal reaction forces $N_{FL}$, $N_{FR}$, $N_{RL}$, and $N_{RR}$ acting upon the driving wheels $WH_{FL}$, $WH_{FR}$, $WH_{RL}$, and $WH_{RR}$. The normal reaction forces $N_{FL}$, $N_{FR}$, $N_{RL}$, and $N_{RR}$ that have been calculated in this manner are sent to the slip ratio calculation part 790 as normal reaction force information.

The details of the processing for estimating the position of the centroid and the normal reaction forces by the centroid estimation part 750 will be described hereinafter.

The slip ratio calculation part 790 described above receives the normal reaction force information for the moving vehicle MV sent from the centroid estimation part 750. Moreover, the slip ratio calculation part 790 receives the driving forces $F_{d,FL}$, $F_{d,FR}$, $F_{d,RL}$, and $F_{d,RR}$ of the driving wheels $WH_{FL}$, $WH_{FR}$, $WH_{RL}$, and $WH_{RR}$ sent from the driving force estimation part 720. And, by using Equation (3) described above, the slip ratio calculation part 790 calculates friction coefficients for the driving wheels $WH_{FL}$, $WH_{FR}$, $WH_{RL}$, and $WH_{RR}$. And, by using Equations (48) and (49) given above, or using Equations (57) and (58) given above, the slip ratio calculation part 790 then calculates slip ratios for the driving wheels $WH_{FL}$, $WH_{FR}$, $WH_{RL}$, and $WH_{RR}$. The slip ratios that have been calculated in this manner are sent to the torque control part 710 as estimated slip ratios.

[Operation]

The operation of the centroid estimation device 700 having the configuration described above will now be explained.

<Processing for estimating the position of the centroid and the normal reaction forces>

Firstly, the processing for estimation of the centroid of the moving vehicle MV and of the normal reaction forces that act upon its driving wheels will be explained.
Here, it will be supposed that the rotational speeds $\omega_j$ detected by the rotational speed sensors $930_j$ (where j=FL, FR, RL, and RR) are sent sequentially to the second acquisition part 740. Moreover, it will be supposed that the results of detection from the various sensors 950 are sent sequentially to the second acquisition part 740.
And it will be supposed that the rotational speeds $\omega_j$ that have been acquired are sent sequentially from the second acquisition part 740 to the torque control part 710 and to the slip ratio calculation part 790. Moreover, it will be supposed that the results of detection by the various sensors 950 are sent sequentially from the second acquisition part 740 to the torque control part 710 and to the centroid estimation part 750.

«Estimation of the positions of the centroid of the moving vehicle MV in the longitudinal direction and in the transverse direction, and the estimation of the normal reaction forces»

The estimation of the positions of the centroid of the moving vehicle MV in the longitudinal direction and in the transverse direction, and the estimation of the normal reaction forces, are executed when it has been determined, on the basis of the results of detection sent from the various sensors 950, that the moving vehicle MV is traveling at constant speed upon a flat road surface. Note that in this embodiment it is supposed that, each time the motors of the moving vehicle MV are started, there is a possibility that the positions of the passengers riding in the vehicle or the position of a load in the vehicle may change, and accordingly it is arranged for processing for estimating the position of the centroid of the moving vehicle MV to be started each time the motors $920_j$ that are installed to the moving vehicle MV are started.
In control for performing the estimation processing for the positions of the centroid of the moving vehicle MV in the longitudinal direction and in the transverse direction, first, as the first control procedure, the torque control part 710 selects the driving wheels $WH_{FL}$ and $WH_{RL}$ (i.e. the first selected driving wheel pair). And, under the condition that the total torque amount $T_m$ is kept the same, the torque control part 710 determines torque control values $T_{m1}$ and $T_{m2}$ so that the rotational speeds $\omega_{FL}$ and $\omega_{RL}$ of the driving wheels $WH_{FL}$ and $WH_{RL}$ become the same, and sends the torque control values $T_{m1}$ and $T_{m2}$ that it has thus determined to the driving force estimation part 720, along with the values of the rotational speeds $\omega_{FL}$ and $\omega_{RL}$.
Upon receipt of the torque control values $T_{m1}$ and $T_{m2}$, and the values of the rotational speeds $\omega_{FL}$ and $\omega_{RL}$ sent from the torque control part 710, the driving force estimation part 720 estimates the driving forces $F_{d,FL}$ and $F_{d,RL}$ for the first selected pair of driving wheels according to its function as a driving force observer, described above. And the driving force estimation part 720 sends these driving forces $F_{d,FL}$ and $F_{d,RL}$ for the first selected pair of driving wheels that it has thus estimated to the first acquisition part 730.
Next, as the second control procedure, the torque control part 710 selects the driving wheels $WH_{FL}$ and $WH_{RR}$ (i.e. the second selected driving wheel pair). And, under the condition that the total torque amount $T_m$ is kept the same, the torque control part 710 determines torque control values $T_{m1}$ and $T_{m2}$ so that the rotational speeds $\omega_{FL}$ and $\omega_{RR}$ of the driving wheels $WH_{FL}$ and $WH_{RR}$ become the same, and sends the torque control values $T_{m1}$ and $T_{m2}$ that it has thus determined to the driving force estimation part 720, along with the values of the rotational speeds $\omega_{FL}$ and $\omega_{RR}$.
Upon receipt of the torque control values $T_{m1}$ and $T_{m2}$, and the values of the rotational speeds $\omega_{FR}$ and $\omega_{RR}$ sent from the torque control part 710, the driving force estimation part 720 estimates the driving forces $F_{d,FL}$ and $F_{d,RR}$ for the second selected pair of driving wheels according to its function as a driving force observer, described above. And the driving force estimation part 720 sends these driving forces $F_{d,FL}$ and $F_{d,RR}$ for the second selected pair of driving wheels that it has thus estimated to the first acquisition part 730.
Next, as the third control procedure, the torque control part 710 selects the driving wheels $WH_{FR}$ and $WH_{RR}$ (i.e. the third selected driving wheel pair). And, under the condition that the total torque amount $T_m$ is kept the same, the torque control part 710 determines torque control values $T_{m1}$ and $T_{m2}$ so that the rotational speeds $\omega_{FR}$ and $\omega_{RR}$ of the driving wheels $WH_{FR}$ and $WH_{RR}$ become the same, and sends the torque control values $T_{m1}$ and $T_{m2}$ that it has thus determined to the driving force estimation part 720, along with the values of the rotational speeds $\omega_{FR}$ and $\omega_{RR}$.

Upon receipt of the torque control values $T_{m1}$ and $T_{m2}$, and the values of the rotational speeds $\omega_{FR}$ and $\omega_{RR}$ sent from the torque control part 710, the driving force estimation part 720 estimates the driving forces $F_{d,FR}$ and $F_{d,RR}$ for the third selected pair of driving wheels according to its function as a driving force observer, described above. And the driving force estimation part 720 sends these driving forces $F_{d,FR}$ and $F_{d,RR}$ for the third selected pair of driving wheels that it has thus estimated to the first acquisition part 730.

Upon acquisition of the driving forces $F_{d,FL}$ and $F_{d,RL}$ for the first selected pair of driving wheels, the driving forces $F_{d,FL}$ and $F_{d,RR}$ for the second selected pair of driving wheels, and the driving forces $F_{d,FR}$ and $F_{d,RR}$ for the third selected pair of driving wheels, the first acquisition part 730 sends the values of the driving forces for these first through third selected driving wheel pairs to the centroid estimation part 750 as mutual relationship information for the driving forces for the four driving wheels.

Upon receipt of the mutual relationship information for the driving forces for the driving wheels sent from the first acquisition part 730, the centroid estimation part 750 estimates the position of the centroid of the moving vehicle MV on the basis of the results of detection by the various sensors 950 sent from the second acquisition part 740 when the moving vehicle MV is traveling at a constant speed upon a flat road surface.

During this estimation of the position of the centroid of the moving vehicle MV, first, from the values of the driving forces $F_{d,FL}$ and $F_{d,RL}$ for the first selected pair of driving wheels, the centroid estimation part 750 calculates $k_{d2}$ using Equation (7) given above, and also calculates $k_{d3}$ using Equation (10) given above from the values of the driving forces $F_{d,FL}$ and $F_{d,RR}$ for the second selected pair of driving wheels. And also, using Equation (13) given above, the centroid estimation part 750 calculates $k_{d1}$ from the values of the driving forces $F_{d,FR}$ and $F_{d,RR}$ for the third selected pair of driving wheels, and from the value of $k_{d3}$ which has just been calculated.

Next, the centroid estimation part 750 calculates the lengths $L_F$ and $L_R$ according to Equations (18) and (19) given above. Moreover, the centroid estimation part 750 calculates the lengths $Lt_L$ and $Lt_R$ according to Equations (21) and (22) given above.

And next, the centroid estimation part 750 calculates the normal reaction forces $N_{FL}$, $N_{FR}$, $N_{RL}$, and $N_{RR}$ acting upon the driving wheels $WH_{FL}$, $WH_{FR}$, $WH_{RL}$, and $WH_{RR}$ according to Equations (31) through (34) given above. The normal reaction forces $N_{FL}$, $N_{FR}$, $N_{RL}$, and $N_{RR}$ that have been calculated in this manner are sent to the slip ratio calculation part 790 as normal reaction force information.

«Processing for estimation of the position of the centroid of the moving vehicle MV in the vertical direction, and for estimation of the normal reaction forces»

Estimation of the position of the centroid of the moving vehicle MV in the vertical direction and estimation of the normal reaction forces are performed when, on the basis of the results of detection sent from the various sensors 950, it has been determined that the moving vehicle MV is traveling at an acceleration $\alpha$ upon a road surface that slopes at an angle of slope $\theta$, or when it has been determined that the moving vehicle MV is traveling at a constant speed upon a road surface that slopes at an angle of slope $\theta$, or when it has been determined that the moving vehicle MV is traveling at an acceleration $\alpha$ upon a flat road surface that is almost parallel to the horizontal plane.

Note that it is supposed that the lengths $L_F$ and $L_R$ have already been derived.

In this estimation of the position in the vertical direction of the centroid of the moving vehicle MV, first, the torque control part 710 selects the first selected driving wheel pair. And, in a similar manner to the case of processing for estimation of the positions of the centroid "in the longitudinal direction and in the transverse direction" described above, the torque control part 710 determines torque control values $T_{m1}$ and $T_{m2}$ so that the rotational speeds of the first selected pair of driving wheels become equal to one another, and sends these torque control values $T_{m1}$ and $T_{m2}$ that have thus been determined to the driving force estimation part 720, along with the values of the rotational speeds $\omega_{FL}$ and $\omega_{FR}$. And, according to its function as a driving force observer described above, the driving force estimation part 720 estimates the driving forces $F_{d,FL}$ and $F_{d,RL}$ for this first selected pair of driving wheels, and sends the results of this estimation to the first acquisition part 730.

Next, the torque control part 710 selects the second selected driving wheel pair. And, in a similar manner to the case of processing for estimation of the positions of the centroid "in the longitudinal direction and in the transverse direction" described above, the torque control part 710 determines torque control values $T_{m1}$ and $T_{m2}$ so that the rotational speeds of the second selected pair of driving wheels become equal to one another, and sends these torque control values $T_{m1}$ and $T_{m2}$ that have thus been determined to the driving force estimation part 720, along with the values of the rotational speeds $\omega_{FL}$ and $\omega_{RR}$. And, according to its function as a driving force observer described above, the driving force estimation part 720 estimates the driving forces $F_{d,FL}$ and $F_{d,RR}$ for this second selected pair of driving wheels, and sends the results of this estimation to the first acquisition part 730.

And next, the torque control part 710 selects the third selected driving wheel pair. And, in a similar manner to the case of processing for estimation of the positions of the centroid "in the longitudinal direction and in the transverse direction" described above, the torque control part 710 determines torque control values $T_{m1}$ and $T_{m2}$ so that the rotational speeds of the third selected pair of driving wheels become equal to one another, and sends these torque control values $T_{m1}$ and $T_{m2}$ that have thus been determined to the driving force estimation part 720, along with the values of the rotational speeds $\omega_{FR}$ and $\omega_{RR}$. And, according to its function as a driving force observer described above, the driving force estimation part 720 estimates the driving forces $F_{d,FR}$ and $F_{d,RR}$ for this third selected pair of driving wheels, and sends the results of this estimation to the first acquisition part 730.

And, upon receipt of these estimation results sent from the driving force estimation part 720, the first acquisition part 730 sends the values of the driving forces for the first through third driving wheel pairs to the centroid estimation part 750 as mutual relationship information for the driving forces for the four driving wheels.

In a similar manner to the case of processing for estimation of the positions of the centroid "in the longitudinal direction and in the transverse direction" described above, the centroid estimation part 750 calculates the ratios of the driving forces for the driving wheels $k_{d1}$ $(=(F_{d,FR}/F_{d,RR}) \cdot k_{d3})$, $k_{d2}$ $(=F_{d,RL}/F_{d,FL})$, and $k_{d3}$ $(=F_{d,RR}/F_{d,FL})$. And next, the centroid estimation part 750 calculates the height H of the centroid of the moving vehicle MV according to Equation (25) given above.

And next, the centroid estimation part 750 calculates the normal reaction forces $N_{FL}$, $N_{FR}$, $N_{RL}$, and $N_{RR}$ acting upon the driving wheels $WH_{FL}$, $WH_{FR}$, $WH_{RL}$, and $WH_{RR}$ according to Equations (44) through (47) given above. The normal reaction forces $N_{FL}$, $N_{FR}$, $N_{RL}$, and $N_{RR}$ that have been calculated in this manner are sent to the slip ratio calculation part 790 as normal reaction force information.

<Slip ratio estimation processing>

Next, the slip ratio estimation processing performed in the embodiment will be explained.

Upon receipt of the "normal reaction force information" sent from the centroid estimation part 750, the slip ratio calculation part 790 executes slip ratio estimation processing.

In the embodiment, during estimation of the slip ratios, "parallel type" torque distribution is performed in which, along with the torque instruction values for the driving wheel $WH_{FL}$ and the driving wheel $WH_{FR}$ being set to a torque instruction value $T_{m1}$, also the torque instruction values for the driving wheel $WH_{RL}$ and the driving wheel $WH_{RR}$ are set to a torque instruction value $T_{m2}$, and the slip ratios $\lambda_j$ (where j=FL, FR, RL, and RR) are estimated under these conditions.

During this estimation of the slip ratios $\lambda_j$, first, estimation of the slip ratios $\lambda_{FL}$ and $\lambda_{RL}$ for the left side driving wheels $WH_{FL}$ and $WH_{RL}$ is performed.

During this estimation of these slip ratios $\lambda_{FL}$ and $\lambda_{RL}$ for the left side driving wheels $WH_{FL}$ and $WH_{RL}$, first, the torque control part 710 determines torque control values $T_{m1}$ and $T_{m2}$ when performing "parallel type" torque distribution on the basis of the sum total $TT_m$ of the torque control values for the driving wheels $WH_{FL}$ through $WH_{RR}$ at the present time point, according to "$T_{m1}=TT_m/4-\Delta T_m$" and "$T_{m2}=TT_m/4+\Delta T_m$". Here, $\Delta T_m$ is set in order to provide a moderate difference between $T_{m1}$ and $T_{m2}$ for calculation of the slip ratios. Moreover, no change in the sum total $TT_m$ of the torque instruction values takes place.

Next the torque control part 710, along with generating torque creation signals on the basis of the torque control value $T_{m1}$ that has been determined and sending these torque creation signals that have thus been generated to the inverters $910_{FL}$ and $910_{FR}$, also generates torque creation signals on the basis of the torque control value $T_{m2}$ that has been determined and sends these torque creation signals that have thus been generated to the inverters $910_{RL}$ and $910_{RR}$. And the torque control part 710 sends a slip ratio estimation instruction that includes a designation of the driving state or the braking state and a designation of the left side driving wheels $WH_{FL}$ and $WH_{RL}$ to the slip ratio calculation part 790.

Upon receipt of this slip ratio estimation instruction, the slip ratio calculation part 790 takes the driving wheels $WH_{FL}$ and $WH_{RL}$ as being the driving wheels $WH_1$ and $WH_2$ in the theory of slip ratio estimation described above, and calculates the friction coefficients $\mu_{FL}$ and $\mu_{RL}$ at the same road surface position. And, on the basis of the abovementioned friction coefficients $\mu_{FL}$ and $\mu_{RL}$ and the rotational speeds $\omega_{FL}$ and $\omega_{RL}$ at the time point of calculation of those friction coefficients $\mu_{FL}$ and $\mu_{RL}$, the slip ratio calculation part 790 calculates estimated values for $\lambda$ according to Equations (48) and (49) given above, or according to Equations (57) and (58) given above.

Next, the slip ratio calculation part 790 sends the slip ratios $\lambda_{FL}$ and $\lambda_{RL}$ to the torque control part 710. And then the slip ratio estimation processing for the left side driving wheels terminates.

Next, estimation of the slip ratios $\lambda_{FR}$ and $\lambda_{RR}$ for the right side driving wheels $WH_{FR}$ and $WH_{RR}$ is performed. During this estimation of these slip ratios $\lambda_{FR}$ and $\lambda_{RR}$ for the right side driving wheels $WH_{FR}$ and $WH_{RR}$, the slip ratio calculation part 790 takes the driving wheels $WH_{FR}$ and $WH_{RR}$ as being the driving wheels $WH_1$ and $WH_2$ in the theory of slip ratio estimation described above, and calculates the friction coefficients $\mu_{FR}$ and $\mu_{RR}$ in a similar manner to the case described above for the driving wheels $WH_{FL}$ and $WH_{RL}$.

Next, in a similar manner to the case for the driving wheels $WH_{FL}$ and $WH_{RL}$ described above, the slip ratio calculation part 790 obtains the slip ratios $\lambda_{FR}$ and $\lambda_{RR}$ on the basis of the abovementioned friction coefficients $\mu_{FR}$ and $\mu_{RR}$ and the rotational speeds $\omega_{FR}$ and $\omega_{RR}$ at the time point of calculation of those friction coefficients $\mu_{FR}$ and $\mu_{RR}$. And the slip ratio calculation part 790 sends these slip ratios $\lambda_{FR}$ and $\lambda_{RR}$ that have thus been obtained to the torque control part 710.

As has been explained above, in this embodiment, while keeping the total of the torque amounts for all of the four driving wheels $WH_{FL}$, $WH_{FR}$, $WH_{RL}$, and $WH_{RR}$ constant, the torque control part 710 determines torque control values so that the rotational speeds of the first selected driving wheel pair (i.e. of the driving wheels $WH_{FL}$ and $WH_{RL}$) become equal to one another, and then determines torque control values so that the rotational speeds of the second selected driving wheel pair (i.e. of the driving wheels $WH_{FL}$ and $WH_{RR}$) become equal to one another. And next the torque control part 710 determines torque control values so that the rotational speeds of the third selected driving wheel pair (i.e. of the driving wheels $WH_{FR}$ and $WH_{RR}$) become equal to one another. And the driving force estimation part 720 estimates the driving forces for the driving wheels on the basis of the torque control values that have been determined by the torque control part 710. Next, the centroid estimation part 750 calculates the ratios of the driving forces $k_{d1}$ ($=F_{d,FR}/F_{d,RR} \cdot k_{d3}$), $k_{d2}$ ($=F_{d,RL}/F_{d,FL}$), and $k_{d3}$ ($=F_{d,RR}/F_{d,FL}$) from the mutual relationship information of the driving forces for the first through the third selected pairs of driving wheels. And then the centroid estimation part 750 estimates the position of the centroid of the moving vehicle MV on the basis of the abovementioned ratios $k_{d1}$, $k_{d2}$, and $k_{d3}$ of the driving forces and the positional relationship of the four driving wheels, and also estimates the normal reaction forces acting upon the driving wheels.

Thus, according to this embodiment of the present invention, it is possible to estimate the centroid of the moving vehicle with a simple structure, and without providing any special sensor.

Moreover, in this embodiment, the slip ratio calculation part 790 calculates the friction coefficients $\mu_{FL}$, $\mu_{FR}$, $\mu_{RL}$, and $\mu_{RR}$ related to the plurality of driving wheels $WH_{FL}$, $WH_{FR}$, $WH_{RL}$, and $WH_{RR}$ on the basis of the driving forces for the driving wheels that have been estimated from the torque control values for the plurality of driving wheels $WH_{FL}$, $WH_{FR}$, $WH_{RL}$, and $WH_{RR}$, and the normal reaction forces that have been derived by the centroid estimation part 750. And the slip ratio calculation part 790 calculates the slip ratios $\lambda_{FL}$, $\lambda_{FR}$, $\lambda_{RL}$, and $\lambda_{RR}$ for the plurality of driving wheels $WH_{FL}$, $WH_{FR}$, $WH_{RL}$, and $WH_{RR}$ on the basis of the friction coefficients $\mu_{FL}$, $\mu_{FR}$, $\mu_{RL}$, and $\mu_{RR}$ that have thus been calculated, and the rotational speeds $\omega_{FL}$, $\omega_{FR}$, $\omega_{RL}$, and $\omega_{RR}$ that have been acquired by the second acquisition part 740.

Due to this, by employing the position of the centroid of the moving vehicle MV that has thus been estimated, it is possible to estimate the friction coefficient for each of the tires and the slip ratio for each of the driving wheels simply and moreover rapidly and with good accuracy. As a result, due to the employment of centroid estimation according to the present invention, it is possible to determine whether or not the road surface is one upon which slippage can easily occur.

Furthermore, since in this embodiment it is possible to estimate the position in the longitudinal direction of the centroid of the moving vehicle, accordingly it is possible to ascertain the moment in the yaw direction. Due to this, it is also possible for the present invention to be applied in the following applications:

(1) estimation of the turning radius in terms of running speed and steering angle;
(2) determination of the steering characteristics of the moving vehicle (understeering, over-steering, or neutral steering); and
(3) horizontal slippage suppression control.

Furthermore, in this embodiment, since it is possible to estimate the height of the centroid of the moving vehicle from the road surface, and since it is possible to estimate the position of the centroid of the moving vehicle in the vertical direction, accordingly it is possible to ascertain the moments in the pitch direction and in the roll direction. Due to this, the present invention can also be applied to the following other applications:

(4) estimation of the pitching amount during starting off and during stopping, and of the pitching amount corresponding to acceleration or deceleration;
(5) estimation of the rolling amount when going around a bend, corresponding to the curve radius and to the running speed.

Accordingly, if it seems that horizontal slippage, pitching, or rolling may become greater, it becomes possible to warn the driver and/or automatically to reduce the motor torque in order to prevent such problems, and this can serve for ensuring safety and/or for prevention of deterioration of the driving feeling.

[Modification of embodiments]

The present invention is not to be considered as being limited to the embodiment described above; it could be altered in various different ways.

For example, in the embodiment described above, the centroid estimation part obtains the ratio of the driving forces for the driving wheels ($F_{d,RL}/F_{d,FL}$) when the rotational speeds of the driving wheels $WH_{FL}$ and $WH_{RL}$ becomes equal, the ratio of the driving forces for the driving wheels ($F_{d,RR}/F_{d,FL}$) when the rotational speeds of the driving wheels $WH_{FL}$ and $WH_{RR}$ becomes equal, and the ratio of the driving forces for the driving wheels ($F_{d,FR}/F_{d,RR}$) when the rotational speeds of the driving wheels $WH_{FR}$ and $WH_{RR}$ becomes equal, and thereby estimates the position of the centroid of the moving vehicle. By contrast, instead of the ratio ($F_{d,RR}/F_{d,FL}$), it would also be acceptable to arrange to obtain the ratio of the driving forces for the driving wheels ($F_{d,RL}/F_{d,FR}$) when the rotational speeds of the driving wheels $WH_{FR}$ and $WH_{RL}$ become equal, and for the centroid estimation part to estimate therefrom the position of the centroid of the moving vehicle.

Moreover, in the embodiment described above, while keeping the total of the torque amounts for all of the four driving wheels $WH_{FL}$, $WH_{FR}$, $WH_{RL}$, and $WH_{RR}$ the same, the torque control part sequentially selected driving wheel pairs whose rotational speed was to be kept equal to one another (i.e. the first selected driving wheel pair, the second selected driving wheel pair, and the third selected driving wheel pair), and determined the torque control values so that the rotational speeds of the selected pair of driving wheels became equal to one another. By contrast, it would also be acceptable to arrange for the torque control part to determine torque control values so that the rotational speeds of all of the four driving wheels become equal to one another simultaneously.

Moreover, in the embodiment described above, in the estimation of the height of the centroid of the moving vehicle, it is necessary to calculate the ratios $k_{d1}$, $k_{d2}$, and $k_{d3}$ of the driving forces when the rotational speeds become equal for respective combinations of the driving wheels during intervals in which the acceleration $\alpha$ remains constant or the angle of slope $\theta$ remains constant. However, with the method of this embodiment in which the ratios $k_{d1}$, $k_{d2}$, and $k_{d3}$ of the driving forces are calculated sequentially, there are also some cases in which it is not possible to estimate the height H of the centroid of the moving vehicle MV by calculating the ratios $k_{d1}$, $k_{d2}$, and $k_{d3}$ of the driving forces during intervals in which the acceleration $\alpha$ remains constant or the angle of slope $\theta$ remains constant.

Supposing this type of case, when the moving vehicle MV is traveling at a constant speed upon a flat road surface that is almost parallel to the horizontal plane, torque distributions when the rotational speeds become equal are obtained in advance for the respective combinations of the driving wheels. And then it is possible to take these torque distributions as initial values, and to estimate the height H of the centroid of the moving vehicle MV from Equation (25) given above, by calculating the ratios $k_{d1}$, $k_{d2}$, and $k_{d3}$ of the driving forces when the rotational speeds become equal, when the moving vehicle MV is traveling upon a road surface that is inclined, or when the moving vehicle MV is traveling with a certain acceleration.

Here, to compare the amount of shifting of the load due to the acceleration and due to the sloping road surface when the moving vehicle MV is traveling at an acceleration $\alpha$ upon a road surface that is inclined at an angle of slope $\theta$ with the amount of such shifting when the moving vehicle MV is traveling at a constant speed upon a flat road surface, the distributions of motor torque that make the rotational speeds equal to one another are different. Due to this, the ratios $k_{d1}$, $k_{d2}$, and $k_{d3}$ of the driving forces when the moving vehicle MV is traveling upon a road surface that is inclined at an angle of slope $\theta$ at an acceleration $\alpha$ (hereinafter termed the "driving force ratios on a non-flat road surface and/or at non-constant speed"), and the ratios $k_{d1}$, $k_{d2}$, and $k_{d3}$ of the driving forces when the moving vehicle MV is traveling upon a flat road surface that is almost parallel to the horizontal plane and at a constant speed (hereinafter termed the "driving force ratios on a flat road surface and at constant speed"), have different values. However, the differences between the driving force ratios during traveling upon a non-flat road surface and/or at non-constant speed and the driving force ratios during traveling upon a flat road surface at constant speed are not very great. Accordingly, it is possible to estimate the height H of the centroid of the moving vehicle MV from the road surface with good accuracy in a comparatively short period of time by obtaining the torque distributions when the rotational speeds become equal for the various combinations of the driving wheels when the moving vehicle MV is traveling upon a flat road surface at constant speed in advance, and by storing them as initial values.

Moreover, in the embodiment described above, "parallel type" torque distribution is performed in which, along with the torque control values for the driving wheel $WH_{FL}$ and for the driving wheel $WH_{FR}$ being set to the torque instruction value $T_{m1}$, also the torque control values for the driving wheel $WH_{RL}$ and for the driving wheel $WH_{RR}$ are set to the torque instruction value $T_{m2}$, and the slip ratios $\lambda_j$ (where j=FL, FR, RL, and RR) are estimated based thereupon. By contrast, it would also be acceptable to arrange to perform "crossed type" torque distribution in which, along with the torque control values for the driving wheel $WH_{FL}$ and for the driving wheel $WH_{RR}$ being set to the torque instruction value $T_{m1}$, also the torque control values for the driving wheel $WH_{FR}$ and for the driving wheel $WH_{RL}$ are set to the torque instruction value $T_{m2}$, and the slip ratios $\lambda_j$ are estimated based thereupon. Furthermore, it would also be acceptable to arrange to perform the "parallel type" torque distribution and the "crossed type" torque distribution described above alternatingly, and to estimate the slip ratios $\lambda_j$ based thereupon.

Note that, with slip ratio estimation in which "crossed type" torque distribution is performed, the slip ratios $\lambda_{FL}$ and $\lambda_{FR}$ for the front side driving wheels are calculated by taking the driving wheels $WH_{FL}$ and $WH_{FR}$ as being the driving wheels $WH_1$ and $WH_2$ in the explanation of "slip ratio estimation" given above. Moreover, in slip ratio estimation in which "crossed type" torque distribution is performed, the slip ratios $\lambda_{FL}$ and $\lambda_{FR}$ for the rear side driving wheels are calculated by taking the driving wheels $WH_{RL}$ and $WH_{RR}$ as being the driving wheels $WH_1$ and $WH_2$ in the explanation of "slip ratio estimation" given above.

Moreover, in the embodiment described above, the present invention was applied to a case in which the moving vehicle MV had four driving wheels that were capable of being driven mutually independently. By contrast, the present invention is not limited to a case in which the moving vehicle has four driving wheels; provided that a moving vehicle has a plurality of driving wheels that can be driven mutually independently, the present invention can be applied to estimation of the position of the centroid of that moving vehicle.

EXAMPLES

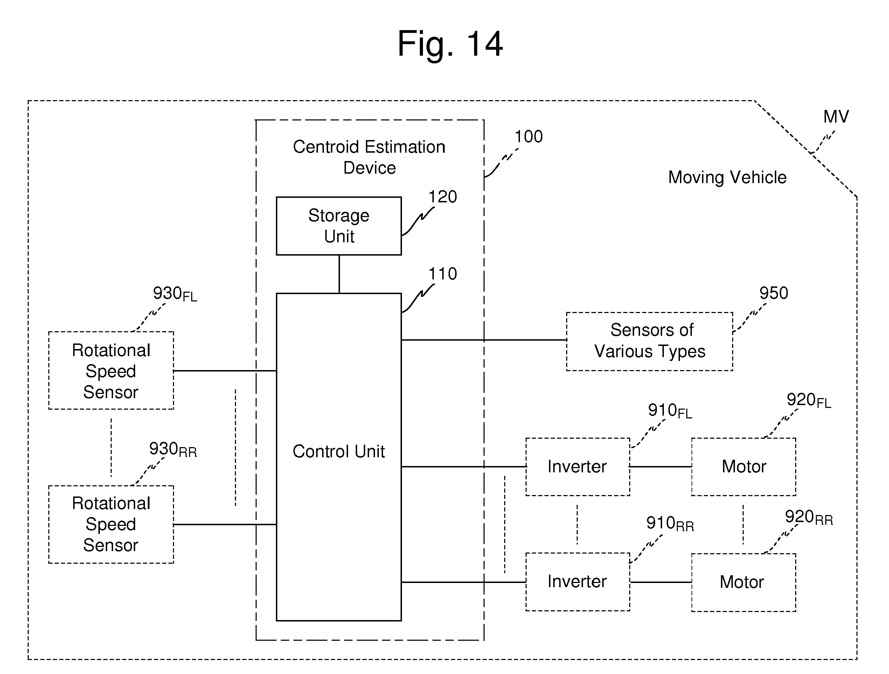

In the following, an example of the present invention will be explained with reference to Figs. 14 through 19. Note that, in the following explanation and drawings, the same reference symbols are appended to elements that are the same or equivalent, and duplicate explanation will be omitted.

[Configuration]

The schematic configuration of a centroid estimation device 100 according to the example of the present invention is shown in Fig. 14. Note that this centroid estimation device 100 is one specific aspect of the centroid estimation device 700 of the embodiment described above (refer to Fig. 13).

As shown in Fig. 14, the centroid estimation device 100 comprises a control unit 110 and a storage unit 120. And inverters $910_j$ (where j=FL, FR, RL, and RR), rotational speed sensors $930_j$, and various sensors 950 installed to a moving vehicle MV are connected to the control unit 110.

Moreover, motors $920_j$ are installed to the moving vehicle MV. And the inverters $910_j$, the motors $920_j$, and the rotational speed sensors $930_j$ are installed so as to correspond to the respective driving wheels $WH_j$.

The control unit 110 described above comprises a central processing device (i.e. a CPU) that serves as a calculation part. By executing a program, this control unit 110 fulfills the functions of the torque control part 710, the driving force estimation part 720, the first acquisition part 730, the second acquisition part 740, the centroid estimation part 750, and the slip ratio calculation part 790 in the centroid estimation device 700 of the embodiment described above.

The program executed by the control unit 110 is stored in the storage unit 120, and is loaded from the storage unit 120 and executed. It would be acceptable to arrange for this program to be acquired in a format of being recorded upon a transportable recording medium such as a CD-ROM, a DVD or the like; or it could also be acquired by the method of being distributed via a network such as the internet or the like.

Note that the processing executed by the control unit 110 will be described hereinafter.

Information and data of various types used by the control unit 110, such as the program described above and so on, is stored in the storage unit 120 described above. The control unit 110 is adapted to be capable of accessing this storage unit 120.

[Operation]

The operation of the centroid estimation device 100 having the configuration described above will now be explained.

Here, it will be supposed that the rotational speeds $\omega_j$ that have been detected by the rotational speed sensors $930_j$ are sequentially sent to the control unit 110. Moreover, it will be supposed that the results of detection by the various sensors 950 are sequentially sent to the control unit 110. Furthermore, it will be supposed that the function of a driving force observer is performed by the control unit 110, so that the driving forces for the respective driving wheels $WH_j$ are sequentially calculated.

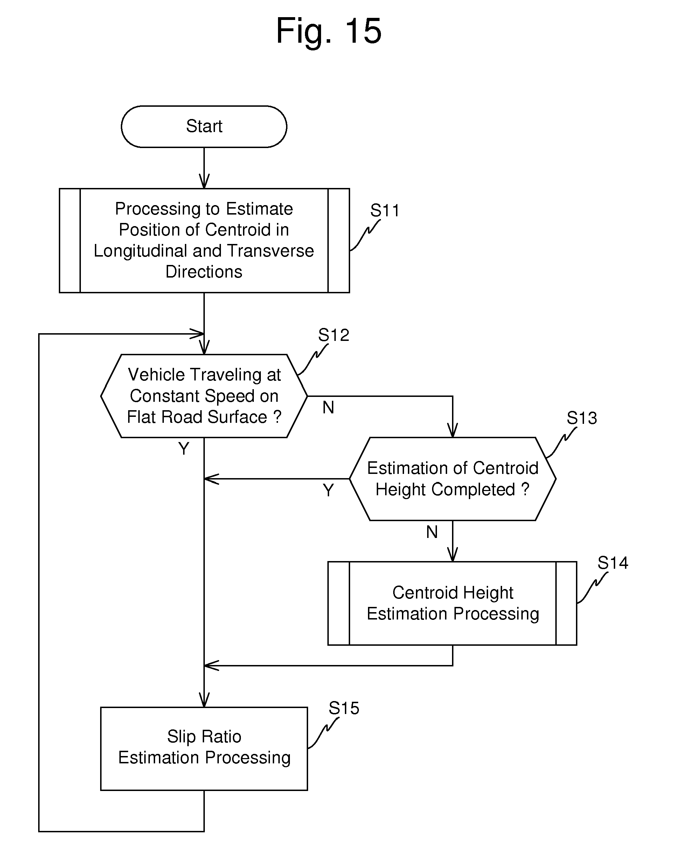

In this example, during estimation of the position of the centroid of the moving vehicle MV and slip ratio estimation that employs the result of this estimation of centroid position, as shown in Fig. 15, first in a step S11 the control unit 110 performs estimation processing for the positions of the centroid in the longitudinal direction and in the transverse direction. The details of the processing in this step S11 will be described hereinafter. When this processing for estimating the positions of the centroid in the longitudinal direction and in the transverse direction has been completed, the flow of control proceeds to a step S12.

In the step S12, on the basis of the results of detection sent from the various sensors 950, the control unit 110 makes a decision as to whether or not the moving vehicle MV is traveling at constant speed upon a flat road surface. If the result of the decision is negative (N in the step S12), then the flow of control proceeds to a step S13.

In the step S13, the control unit 110 makes a decision as to whether or not estimation of the height H of the centroid of the moving vehicle MV has been completed. If the result of this decision is negative (N in the step S 13), then the flow of control proceeds to a step S14. In this step S14, the control unit 110 performs processing to estimate the height H of the centroid of the moving vehicle MV from the road surface. The processing of this step S14 will be described hereinafter. And when this processing to estimate the height H of the centroid of the moving vehicle MV has been completed, the flow of control proceeds to a step S15.

On the other hand, if the result of the decision in the step S12 described above is affirmative (Y in the step S12), then the flow of control is transferred to a step S 15. Moreover, if the result of the decision in the step S 13 described above is affirmative (Y in the step S13), then the flow of control is likewise transferred to the step S15.

In this step S15, the control unit 110 performs slip ratio estimation processing using the normal reaction forces $N_{FL}$, $N_{FR}$, $N_{RL}$, and $N_{RR}$ acting upon the driving wheels $WH_{FL}$, $WH_{FR}$, $WH_{RL}$, and $WH_{RR}$ that have been calculated, in a similar manner to the case with the slip ratio estimation processing performed in the embodiment described above. And when this slip ratio estimation processing has been completed, the flow of control returns to the step S12.

Subsequently, the processing of the steps S12 through S15 described above is repeated.

<The processing for estimating the positions of the centroid in the longitudinal direction and in the transverse direction>

Next, the "processing for estimating the positions of the centroid in the longitudinal direction and in the transverse direction" performed in the step S11 will be explained.

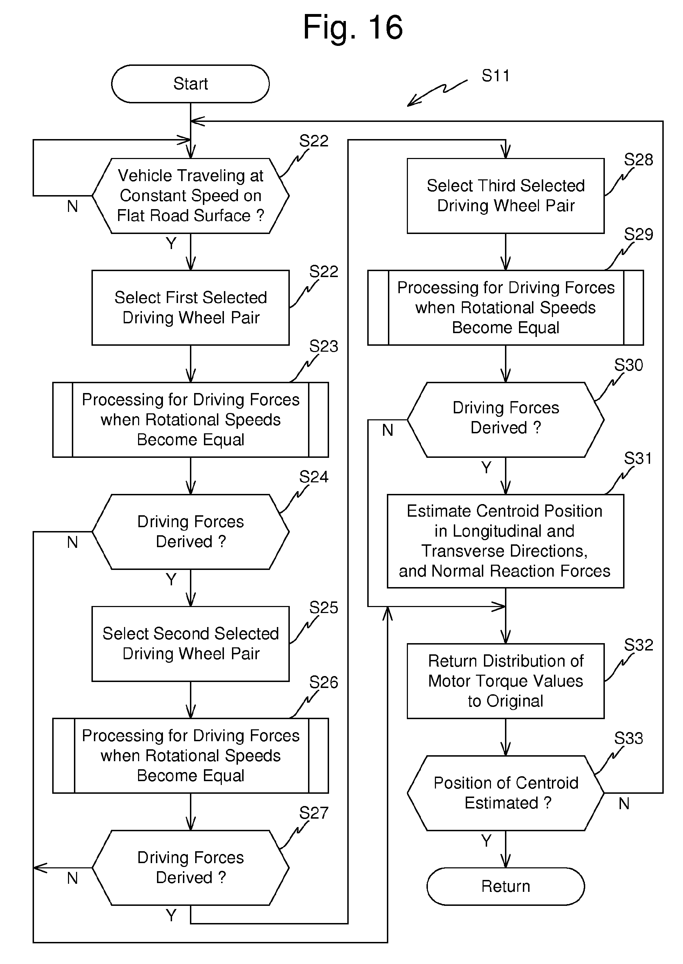

During this processing for estimating the positions of the centroid in the longitudinal direction and in the transverse direction, first, as shown in Fig. 16, in a step S21, on the basis of the results of detection sent from the various sensors 950, the control unit 110 makes a decision as to whether or not the moving vehicle MV is traveling at constant speed upon a flat road surface. If the result of the decision is negative (N in the step S21), then the processing of this step S21 is repeated. On the other hand, if the result of the decision is affirmative (Y in the step S21), then the flow of control proceeds to a step S22.

In this step S22, the control unit 110 selects the driving wheels $WH_{FL}$ and $WH_{RL}$ as the selected driving wheel pair. Next, in a step S23, "processing to derive the driving forces for the selected pair of driving wheels when their rotational speeds become equal" is performed. The processing of this step S23 will be described hereinafter.

Next, in a step S24, the control unit 110 makes a decision as to whether or not, in the directly preceding step S23, it was possible to derive the driving forces $F_{d,FL}$ and $F_{d,RL}$ for the selected driving wheel pair (i.e. for the first selected driving wheel pair). If the result of the decision is negative (N in the step S24), then the flow of control is transferred to a step S32 which will be described hereinafter. On the other hand, if the result of the decision in the step S24 is affirmative (Y in the step S24), then the flow of control proceeds to a step S25.

In the step S25, the control unit 110 selects the driving wheels $WH_{FL}$ and $WH_{RR}$ as the selected driving wheel pair. And next, in a step S26, "processing to derive the driving forces for the selected pair of driving wheels when their rotational speeds become equal" is performed. The processing of this step S26 will be described hereinafter.

Next, in a step S27, the control unit 110 makes a decision as to whether or not, in the directly preceding step S26, it was possible to derive the driving forces $F_{d,FL}$ and $F_{d,RR}$ for the selected driving wheel pair (i.e. for the second selected driving wheel pair). If the result of the decision is negative (N in the step S27), then the flow of control is transferred to the step S32 which will be described hereinafter. On the other hand, if the result of the decision in the step S27 is affirmative (Y in the step S27), then the flow of control proceeds to a step S28.

In the step S28, the control unit 110 selects the driving wheels $WH_{FR}$ and $WH_{RR}$ as the selected driving wheel pair. And next, in a step S29, "processing to derive the driving forces for the selected pair of driving wheels when their rotational speeds become equal" is performed. The processing of this step S29 will be described hereinafter.

Next, in a step S30, the control unit 110 makes a decision as to whether or not, in the directly preceding step S29, it was possible to derive the driving forces $F_{d,FR}$ and $F_{d,RR}$ for the selected driving wheel pair (i.e. for the third selected driving wheel pair). If the result of the decision is negative (N in the step S30), then the flow of control is transferred to the step S32 which will be described hereinafter. On the other hand, if the result of the decision in the step S30 is affirmative (Y in the step S30), then the flow of control proceeds to a step S31.

Next, in the step S31, from the values $F_{d,FL}$ and $F_{d,RL}$ of the driving forces for the first selected pair of driving wheels, the control unit 110 calculates $k_{d2}$ by using Equation (7) given above, and also, from the values $F_{d,FL}$ and $F_{d,RR}$ of the driving forces for the second selected pair of driving wheels, calculates $k_{d3}$ by using Equation (10) given above. And then, from the values $F_{d,FR}$ and $F_{d,RR}$ of the driving forces for the third selected pair of driving wheels and from the value of $k_{d3}$ that has been calculated as described above, the control unit 110 calculates $k_{d1}$ by using Equation (13) given above.

Next, the control unit 110 calculates the lengths $L_F$ and $L_R$ according to Equations (18) and (19) given above, and also calculates the lengths $Lt_L$ and $Lt_R$ according to Equations (21) and (22) given above. And next the control unit 110 calculates the normal reaction forces $N_{FL}$, $N_{FR}$, $N_{RL}$, and $N_{RR}$ acting upon the driving wheels $WH_{FL}$, $WH_{FR}$, $WH_{RL}$, and $WH_{RR}$ according to Equations (31) through (34) given above. And then the flow of control proceeds to the step S32.

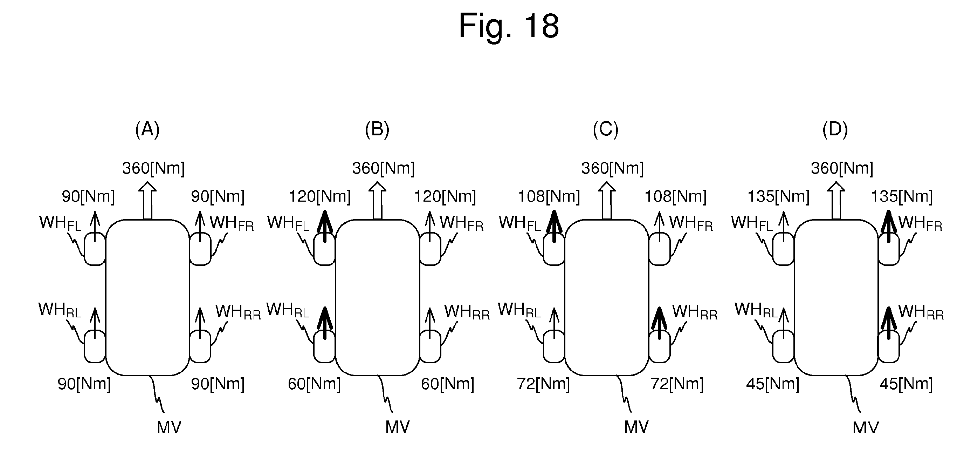

In this step S32, the control unit 110 returns the distribution of the motor torque values for the four driving wheels to the values at the starting time point of processing in the step S11 (this will be described hereinafter with reference to Fig. 18(A)).

And next, in a step S33, the control unit 110 makes a decision as to whether or not it has been possible to estimate the position of the centroid of the moving vehicle MV. If the result of the decision is negative (N in the step

S33), then the flow of control returns to the step S21. On the other hand, if the result of the decision in the step S33 is affirmative (Y in the step S33), then this processing for estimating the position of the centroid of the moving vehicle MV terminates. And then the flow of control proceeds to the step S12 of Fig. 15 described above.

«The processing to derive the driving forces for the selected pair of driving wheels when their rotational speeds become equal»

Next, the "processing to derive the driving forces for the selected pair of driving wheels when their rotational speeds become equal" performed in the steps S23, S26, and S29 described above will be explained.

(The processing of the step S23)

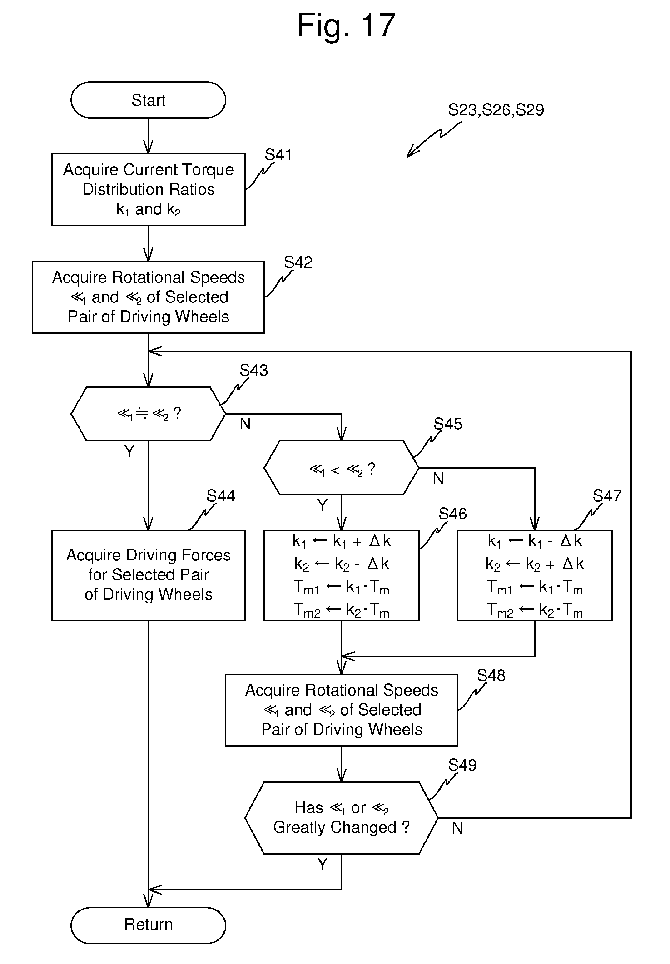

As shown in Fig. 17, in the processing of the step S23, first in a step S41 the control unit 110 acquires the current torque distribution ratios $k_1$ and $k_2$. Here, these distribution ratios $k_1$ and $k_2$ are respectively given by "$k_1 = T_{m1}/T_m$" and "$k_2 = T_{m2}/T_m$", so that the relationship "$k_1 + k_2 = 0.5$" holds. Next, in a step S42, the control unit 110 acquires the "rotational speeds $\omega_{FL}$ and $\omega_{RL}$", as the rotational speeds $\omega_1$ and $\omega_2$ of the selected pair of driving wheels. And then the flow of control proceeds to a step S43.

In the step S43, the control unit 110 makes a decision as to whether or not the relationship "$\omega_1 \fallingdotseq \omega_2$" holds between the rotational speeds of the selected pair of driving wheels. If the result of the decision is affirmative (Y in the step S43), then the flow of control proceeds to a step S44. In this step S44, the control unit 110 acquires the driving forces $F_{d,FL}$ and $F_{d,RL}$ for the selected pair of driving wheels. When the driving forces when the rotational speeds of the selected pair of driving wheels are almost equal have been acquired in this manner, this driving force derivation processing terminates.

On the other hand, if the result of the decision in the step S43 described above is negative (N in the step S43), then the flow of control is transferred to a step S45. In this step S45, the control unit 110 makes a decision as to whether or not the relationship "$\omega_1 < \omega_2$" holds between the rotational speeds of the selected pair of driving wheels. If the result of the decision is affirmative (Y in the step S45), then the flow of control proceeds to a step S46.

In this step S46, the control unit 110 sets a new distribution ratio $k_1$ equal to "$k_1 + \Delta k$", and also sets a new distribution ratio $k_2$ equal to "$k_2 - \Delta k$". As a result, along with a new torque control value $T_{m1}$ being set to "$k_1 \cdot T_m = (k_1 + \Delta k)T_m$", also a new torque control value $T_{m2}$ is set to "$k_2 \cdot T_m = (k_2 - \Delta k)T_m$". And then the flow of control is transferred to a step S48 that will be described hereinafter.

On the other hand, if the result of the decision in the step S45 described above is negative (N in the step S45), then the flow of control is transferred to a step S47. In this step S47, the control unit 110 sets a new distribution ratio $k_1$ to "$k_1 - \Delta k$", and also sets a new distribution ratio $k_2$ equal to "$k_2 + \Delta k$". As a result, along with a new torque control value $T_{m1}$ being set to "$k_1 \cdot T_m = (k_1 - \Delta k)T_m$", also a new torque control value $T_{m2}$ is set to "$k_2 \cdot T_m = (k_2 + \Delta k)T_m$". And then the flow of control proceeds to the step S48.

In the step S48, in a similar manner to the case in the step S42 described above, the control unit 110 acquires the "rotational speeds $\omega_{FL}$ and $\omega_{RL}$", which are the rotational speeds $\omega_1$ and $\omega_2$ of the selected pair of driving wheels.

And next, in a step S49, the control unit 110 makes a decision as to whether or not the rotational speed $\omega_1$ or the rotational speed $\omega_2$ has greatly changed. If the result of the decision is affirmative (Y in the step S49), then this processing for derivation of the driving forces terminates. In this case, the reason for the termination of the processing for derivation of the driving forces is because, when the rotational speed $\omega_1$ or the rotational speed $\omega_2$ has abruptly risen from the previous time it was acquired, it is decided that the slip ratio is close to being in a large state, for example.

On the other hand, if the result of the decision in the step S49 is negative (N in the step S49), then the flow of control returns to the step S43. Note that, in the processing of this step S23, since the torque distribution ratios $k_1$ and $k_2$ are adjusted, accordingly it is still possible to continue processing for derivation of the driving forces when the rotational speeds become equal, even if the total torque amount $T_m$ (which is determined from the amount by which the accelerator pedal is depressed) changes.

(The processing of the step S26)

To compare the "processing for derivation of the driving forces when the rotational speeds of the selected pair of driving wheels become equal" in the step S26 mentioned above with the processing for derivation of the driving forces in the step S23, the points of difference are that, in the steps S42 and S48, the control unit 110 acquires the "rotational speeds $\omega_{FL}$ and $\omega_{RR}$" as the rotational speeds $\omega_1$ and $\omega_2$ of the selected pair of driving wheels, and that, in the step S44, the control unit 110 acquires the driving forces $F_{d,FL}$ and $F_{d,RR}$ of the selected pair of driving wheels.

(The processing of the step S29)

Moreover, to compare the "processing for derivation of the driving forces when the rotational speeds of the selected pair of driving wheels become equal" in the step S29 mentioned above with the processing for derivation of the driving forces in the step S23, the points of difference are that, in the steps S42 and S48, the control unit 110 acquires the "rotational speeds $\omega_{FR}$ and $\omega_{RR}$" as the rotational speeds $\omega_1$ and $\omega_2$ of the selected pair of driving wheels, and that, in the step S44, the control unit 110 acquires the driving forces $F_{d,FR}$ and $F_{d,RR}$ of the selected pair of driving wheels.

Here a case will be supposed in which, in the processing described above for estimation of the position of the centroid of the moving vehicle MV, as for example shown in Fig. 18, the total torque control amount $T_m$ is 360 Nm. If the torque values for all of the driving wheels are the same, then, as shown in Fig. 18(A), the torque control value $T_{m1}$ that is provided to each of the front side driving wheels $WH_{FL}$ and $WH_{FR}$ is 90 Nm, and the torque control value $T_{m2}$ that is provided to each of the rear side driving wheels $WH_{RL}$ and $WH_{RR}$ is also 90 Nm.

And, in the processing of the step S22 of Fig. 16 described above, the front left side driving wheel $WH_{FL}$ and the rear left side driving wheel $WH_{RL}$ are selected as the first selected driving wheel pair. Moreover let it be supposed that, in the processing of the step S23, as shown in Fig. 18(B), when the torque control value $T_{m1}$ that is provided to each of the front side driving wheels $WH_{FL}$ and $WH_{FR}$ is set to 120 Nm while the torque control value $T_{m2}$ that is provided to each of the rear side driving wheels $WH_{RL}$ and $WH_{RR}$ is set to 60 Nm, then the rotational speed $\omega_{FL}$ of the front left side driving wheel $WH_{FL}$ and the rotational speed $\omega_{RL}$ of the rear left side driving wheel $WH_{RL}$ become equal to one another.

Then let it be supposed that when, by its function as a driving force observer, the control unit 110 calculates the driving forces for the first selected pair of driving wheels on the basis of the torque control values $T_{m1}$ (=120 Nm) and $T_{m2}$ (=60 Nm), these driving forces are respectively $F_{d,FL}$=400 N and $F_{d,RL}$=200 N. As a result, by employing Equation (7) given above, the result $k_{d2} = (F_{d,RL}/F_{d,FL}) = (200/400) = 1/2$ is obtained.

Furthermore, in the processing of the step S25 described above, the front left side driving wheel $WH_{FL}$ and the rear right side driving wheel $WH_{RR}$ are selected as the second selected driving wheel pair. Moreover let it be supposed that, in the processing of the step S26, as shown in Fig. 18(C), when the torque control value $T_{m1}$ that is provided to each of the front side driving wheels $WH_{FL}$ and $WH_{FR}$ is set to 108 Nm while the torque control value $T_{m2}$ that is provided to each of the rear side driving wheels $WH_{RL}$ and $WH_{RR}$ is set to 72 Nm, then the rotational speed $\omega_{FL}$ of the front left side driving wheel $WH_{FL}$ and the rotational speed $\omega_{RR}$ of the rear right side driving wheel $WH_{RR}$ become equal to one another.

Then let it be supposed that when, by its function as a driving force observer, the control unit 110 calculates the driving forces for the second selected pair of driving wheels on the basis of the torque control values $T_{m1}$ (=108 Nm) and $T_{m2}$ (=72 Nm), these driving forces are respectively $F_{d,FL}$=360 N and $F_{d,RR}$=240 N. As a result, by employing Equation (10) given above, the result $k_{d3} = (F_{d,RR}/F_{d,FL}) = (240/360) = 2/3$ is obtained.

Yet further, in the processing of the step S28 described above, the front right side driving wheel $WH_{FR}$ and the rear right side driving wheel $WH_{RR}$ are selected as the third selected driving wheel pair. Moreover let it be supposed that, in the processing of the step S29, as shown in Fig. 18(D), when the torque control value $T_{m1}$ that is provided to each of the front side driving wheels $WH_{FL}$ and $WH_{FR}$ is set to 135 Nm while the torque control value $T_{m2}$ that is provided to each of the rear side driving wheels $WH_{RL}$ and $WH_{RR}$ is set to 45 Nm, then the rotational speed $\omega_{FR}$ of the front right side driving wheel $WH_{FR}$ and the rotational speed $\omega_{RR}$ of the rear right side driving wheel $WH_{RR}$ become equal to one another.

Then let it be supposed that when, by its function as a driving force observer, the control unit 110 calculates the driving forces for the third selected pair of driving wheels on the basis of the torque control values $T_{m1}$ (=135 Nm) and $T_{m2}$ (=45 Nm), these driving forces are respectively $F_{d,FR}$=450 N and $F_{d,RR}$=150 N. As a result, by employing Equation (13) given above, the result $k_{d1} = (F_{d,FR}/F_{d,RR})\cdot k_{d3} = (450/150)\cdot(2/3) = 2$ is obtained.

Next, from these driving force ratios $k_{d1}$=2, $k_{d2}$=1/2, and $k_{d3}$=2/3, the control unit 110 calculates the lengths $L_F$ and $L_R$ according to Equations (18) and (19) given above, and also calculates the lengths $Lt_L$ and $Lt_R$ according to Equations (21) and (22) given above. The results obtained are that $L_F=(7/25)\cdot L$, $L_R=(18/25)L$, $Lt_L=(16/25)Lt$, and $Lt_R=(9/25)Lt$.

Note that, during the calculation of the driving forces for the selected pairs of driving wheels described above, since the vehicle is traveling at constant speed, accordingly $(d\omega/dt)$ is assumed as being 0, so that a variant of Equation (2) described above is used, i.e. "$F_d=T_m/r$" (where r=0.3 m).

<The centroid height estimation processing>

Next, the "centroid height estimation processing" performed in the step S14 will be explained. Note that it will be supposed that the lengths $L_F$ and $L_R$ have already been derived.

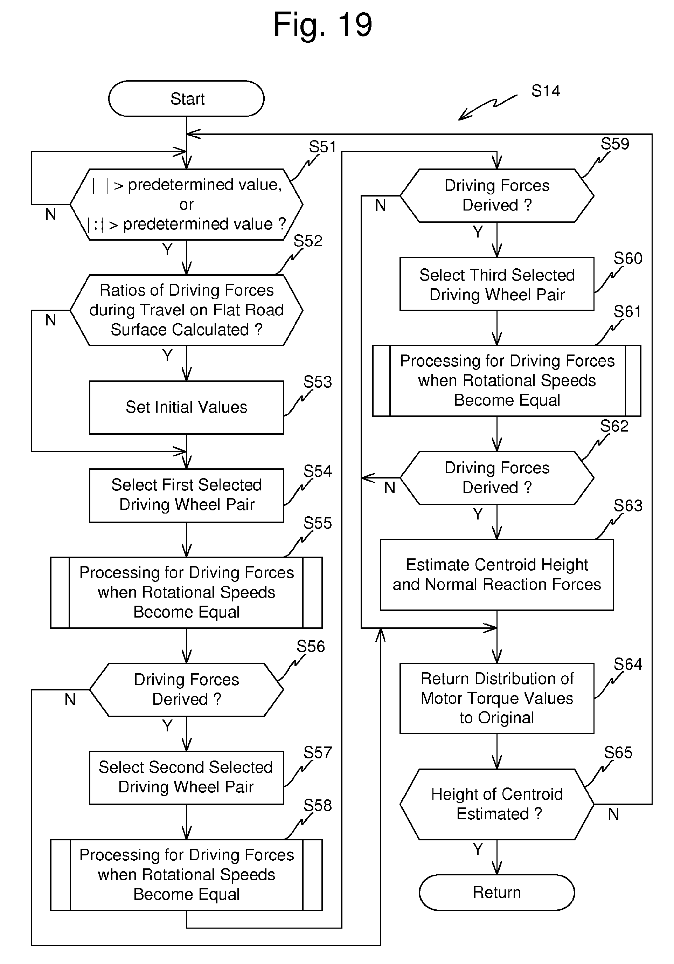

During this estimation of the height H of the centroid of the moving vehicle MV from the road surface, as shown in Fig. 19, first in a step S51, on the basis of the detection results sent from the various sensors 950, the control unit makes a decision as to whether or not the absolute value of the acceleration $\alpha$ is greater than a predetermined value, or the absolute value of the angle of slope $\alpha$ is greater than a predetermined value. If the result of the decision is negative (N in the step S51), then the processing of the step S51 is repeated. On the other hand, if the result of the decision is affirmative (Y in the step S51), then the flow of control proceeds to a step S52.

In this step S52, the control unit makes a decision as to whether or not, when the moving vehicle has been traveling on a flat road surface at a constant speed, the ratios of the driving forces when the rotational speeds became equal, i.e. $k_{d1}$ $(=(F_{d,FR}/F_{d,RR})\cdot k_{d3})$, $k_{d2}$ $(=F_{d,RL}/F_{d,FL})$, and $k_{d3}$ $(=F_{d,RR}/F_{d,FL})$, have been calculated. If the result of the decision is affirmative (Y in the step S52), then the flow of control proceeds to a step S53. In this step S53, the torque control values $T_{m1}$ and $T_{m2}$ when the ratios of the driving forces for the driving wheels $k_{d1}$, $k_{d2}$, and $k_{d3}$ were calculated are set as initial values. Then the flow of control proceeds to a step S54.

On the other hand, if the result of the decision in the step S52 described above is negative (N in the step S52), then the flow of control is transferred to the step S54.

In the step S54, the control unit selects the first selected driving wheel pair, in a similar manner to the processing of the step S22 of Fig. 16 described above. And next in a step S55, in a similar manner to the processing of the step S23 described above (refer to Fig. 17), the control unit performs derivation processing for the driving forces when the rotational speeds of the first selected pair of driving wheels become equal to one another.

Here, when the initial values of the torque control values have been installed in the step S53, the control unit performs similar processing to that of the above step S23 while using those initial values.

Next in a step S56 the control unit 110 makes a decision as to whether or not, in the directly preceding step S55, it was possible to derive the driving forces $F_{d,FL}$ and $F_{d,RL}$ for the first selected pair of driving wheels. If the result of the decision is negative (N in the step S56), then the flow of control is transferred to a step S64 that will be described hereinafter. On the other hand, if the result of the decision in the step S56 is affirmative (Y in the step S56), then the flow of control proceeds to a step S57.

In this step S57, the control unit 110 selects the second selected driving wheel pair, in a similar manner to the processing of the step S25 of Fig. 16 described above. And next in a step S58, in a similar manner to the processing of the step S26 described above (refer to Fig. 17), the control unit performs derivation processing for the driving forces when the rotational speeds of the second selected pair of driving wheels become equal to one another.

Here, when the initial values of the torque control values have been installed in the step S53, the control unit performs similar processing to that of the above step S26 while using those initial values.

Next in a step S59 the control unit 110 makes a decision as to whether or not, in the directly preceding step S58, it was possible to derive the driving forces $F_{d,FL}$ and $F_{d,RR}$ for the second selected pair of driving wheels. If the result of the decision is negative (N in the step S59), then the flow of control is transferred to the step S64 that will be described hereinafter. On the other hand, if the result of the decision in the step S59 is affirmative (Y in the step S59), then the flow of control proceeds to a step S60.

In this step S60, the control unit 110 selects the third selected driving wheel pair, in a similar manner to the processing of the step S28 of Fig. 16 described above. And next in a step S61, in a similar manner to the processing of the step S29 described above (refer to Fig. 17), the control unit performs derivation processing for the driving forces when the rotational speeds of the third selected pair of driving wheels become equal to one another.

Here, when the initial values of the torque control values have been installed in the step S53, the control unit performs similar processing to that of the above step S29 while using those initial values.

Next in a step S62 the control unit 110 makes a decision as to whether or not, in the directly preceding step S61, it was possible to derive the driving forces $F_{d,FR}$ and $F_{d,RR}$ for the third selected pair of driving wheels. If the result of the decision is negative (N in the step S62), then the flow of control is transferred to the step S64 that will be described hereinafter. On the other hand, if the result of the decision in the step S62 is affirmative (Y in the step S62), then the flow of control proceeds to a step S63.

In the step S63, the control unit calculates $k_{d2}$ from the values $F_{d,FL}$ and $F_{d,RL}$ of the driving forces for the first selected pair of driving wheels by using Equation (7) given above, and also calculates $k_{d3}$ from the values $F_{d,FL}$ and $F_{d,RR}$ of the driving forces for the second selected pair of driving wheels by using Equation (10) given above. And then, by using Equation (13) given above, the control unit calculates $k_{d1}$ from the values $F_{d,FR}$ and $F_{d,RR}$ of the driving forces for the third selected pair of driving wheels, and from $k_{d3}$ that has been calculated as described above.

Next, the control unit calculates the height H of the centroid of the moving vehicle MV from the road surface according to Equation (25) given above. And next the control unit 110 calculates the normal reaction forces $N_{FL}$, $N_{FR}$, $N_{RL}$, and $N_{RR}$ acting upon the driving wheels $WH_{FL}$, $WH_{FR}$, $WH_{RL}$, and $WH_{RR}$ according to Equations (44) through (47) given above. And then the flow of control proceeds to the step S64.

In the step S64, the control unit returns the distribution of motor torque values for the four driving wheels to the values at the starting time point of processing in the step S14 (refer to Fig. 18(A) described above).

And next in a step S65 the control unit 110 makes a decision as to whether or not it has been possible to estimate the height H of the centroid of the moving vehicle MV. If the result of the decision is negative (N in the step S65), then the flow of control returns to the step S51. On the other hand, if the result of the decision in the step S65 is affirmative (Y in the step S65), then this processing for estimating the height H of the centroid of the moving vehicle terminates. And then the flow of control is transferred to the step S 15 of Fig. 15, described above.

As has been explained above, in the example, while keeping the total of the torque amounts for all of the four driving wheels $WH_{FL}$, $WH_{FR}$, $WH_{RL}$, and $WH_{RR}$ the same, the control unit 110 determines torque control values so that the rotational speeds of the first selected driving wheel pair (i.e. the driving wheels $WH_{FL}$ and $WH_{RL}$) become equal to one another, and next determines torque control values so that the rotational speeds of the second selected driving wheel pair (i.e. the driving wheels $WH_{FL}$ and $WH_{RR}$) become equal to one another. And next the control unit 110 determines torque control values so that the rotational speeds of the third selected driving wheel pair (i.e. the driving wheels $WH_{FR}$ and $WH_{RR}$) become equal to one another. And the control unit 110 estimates the driving forces for the driving wheels on the basis of the torque control values that have been determined. Next, the control unit 110 calculates the ratios of the driving forces $k_{d1}$ (=($F_{d,FR}/F_{d,RR}$) $k_{d3}$), $k_{d2}$ (=$F_{d,RL}/F_{d,FL}$), and $k_{d3}$ (=$F_{d,RR}/F_{d,FL}$ from the mutual relationship information of the driving forces for the first through the third selected pairs of driving wheels. And then the control unit 110 estimates the position of the centroid of the moving vehicle MV on the basis of the abovementioned ratios $k_{d1}$, $k_{d2}$, and $k_{d3}$ of the driving forces and the positional relationship of the four driving wheels, and also estimates the normal reaction forces acting upon the driving wheels.

Thus, according to the present invention, it is possible to estimate the position of the centroid of the moving vehicle with a simple structure, and without the provision of any special sensor.

Moreover, in the example, the control unit 110 derives the normal reaction forces $N_{FL}$, $N_{FR}$, $N_{RL}$, and $N_{RR}$ that act upon the driving wheels $WH_{FL}$, $WH_{FR}$, $WH_{RL}$, and $WH_{RR}$ on the basis of the position of the centroid of the moving vehicle MV that has been estimated. Next, the control unit 110 calculates the friction coefficients $\mu_{FL}$, $\mu_{FR}$, $\mu_{RL}$, and $\mu_{RR}$ related to the plurality of driving wheels $WH_{FL}$, $WH_{FR}$, $WH_{RL}$, and $WH_{RR}$ on the basis of the driving forces for the driving wheels that have been estimated from the torque control values for the plurality of driving wheels $WH_{FL}$, $WH_{FR}$, $WH_{RL}$, and $WH_{RR}$, and on the basis of the normal reaction forces that have been derived. And the control unit 110 calculates the slip ratios $\lambda_{FL}$, $X_{FR}$, $\lambda_{RL}$, and $\lambda_{RR}$ of the plurality of driving wheels $WH_{FL}$, $WH_{FR}$, $WH_{RL}$, and $WH_{RR}$ on the basis of the friction coefficients $\mu_{FL}$, $\mu_{FR}$, $\mu_{RL}$, and $\mu_{RR}$ that have been calculated, and on the basis of the rotational speeds $\omega_{FL}$, $\omega_{FR}$, $\omega_{RL}$, and $\omega_{RR}$ that have been acquired.

Due to this, by employing the position of the centroid of the moving vehicle MV that has been estimated, it is possible to estimate the friction coefficient for each of the tires and the slip ratio for each of the driving wheels simply and rapidly and moreover with good accuracy. As a result, by employing the centroid estimation of the present invention, it is possible to determine whether or not the road surface is one upon which it is easy for slippage to occur.

[Modification of the example]

The present invention is not to be considered as being limited to the example described above; it may be altered in various ways.

For example, in the example described above, the control unit estimated the position of the centroid of the moving vehicle by obtaining the ratio ($F_{d,RL}/F_{d,FL}$) of the driving forces for the driving wheels $WH_{FL}$ and $WH_{RL}$ when their rotational speeds became equal to one another, the ratio ($F_{d,RR}/F_{d,FL}$) of the driving forces for the driving wheels $WH_{FL}$ and $WH_{RR}$ when their rotational speeds became equal to one another, and the ratio ($F_{d,FR}/F_{d,RR}$) of the driving forces for the driving wheels $WH_{FR}$ and $WH_{RR}$ when their rotational speeds became equal to one another. By contrast, instead of obtaining the ratio ($F_{d,RR}/F_{d,FL}$), it would also be acceptable to arrange for the control unit to estimate the position of the centroid of the moving vehicle by obtaining the ratio ($F_{d,RL}/F_{d,FR}$) of the driving forces for the driving wheels $WH_{FR}$ and $WH_{RL}$ when their rotational speeds become equal to one another.

Moreover, in the example described above, while keeping the total of all of the torque amounts for the four driving wheels $WH_{FL}$, $WH_{FR}$, $WH_{RL}$, and $WH_{RR}$ the same, the control unit sequentially selected driving wheel pairs whose rotational speeds were to be made equal to one another (i.e. the first selected driving wheel pair, the second selected driving wheel pair, and the third selected driving wheel pair), and determined torque control values such that the rotational speeds of the selected pair of driving wheels agreed with one another. By contrast, it would also be acceptable to arrange for the torque control unit to determine the torque control values so that the rotational speeds of all of the four driving wheels agreed with one another simultaneously.

For example, if the total torque for all of the four driving wheels is 360 Nm (see Fig. 18 described above), then it might be possible to make the rotational speeds of all of the driving wheels be equal to one another with an distribution of torque in which the torque for the front left side driving wheel $WH_{FL}$ is 86.4 Nm, the torque for the front right side driving wheel $WH_{FR}$ is 172.8 Nm, the torque for the rear left side driving wheel $WH_{RL}$ is 43.2 Nm, and the torque for the rear right side driving wheel $WH_{RR}$ is 57.6 Nm; and then it would be possible to obtain the driving force ratios $k_{d1}=2$, $k_{d2}=1/2$, and $k_{d3}=2/3$ with a single episode of processing.

However it is not simple to adjust the torques for the four driving wheels by increasing and decreasing them while maintaining the condition that the total torque is kept constant; and moreover, since the condition is also added that the yaw moment imposed upon the moving vehicle should not become high, a complicated algorithm is required in order to obtain all the driving force ratios in a single episode of processing. Accordingly, by performing adjustment of the torques sequentially in order as shown in the above example, processing is performed in a simple manner so as to satisfy both the two conditions: the condition that the total torque should be kept constant, and the condition that no large yaw moment should be imposed upon the moving vehicle.

Moreover, in the example described above, "parallel type" torque distribution is performed in which, along with the torque control values for the driving wheel $WH_{FL}$ and for the driving wheel $WH_{FR}$ being set to the torque instruction value $T_{m1}$, also the torque control values for the driving wheel $WH_{RL}$ and for the driving wheel $WH_{RR}$ are set to the torque instruction value $T_{m2}$, and the slip ratios $\lambda_j$ (where j=FL, FR, RL, and RR) are estimated based thereupon. By contrast, it would also be acceptable to arrange to perform "crossed type" torque distribution in which, along with the torque control values for the driving wheel $WH_{FL}$ and for the driving wheel $WH_{RR}$ being set to the torque instruction value $T_{m1}$, also the torque control values for the driving wheel $WH_{FR}$ and for the driving wheel $WH_{RL}$ are set to the torque instruction value $T_{m2}$, and the slip ratios $\lambda_j$ are estimated based thereupon.

Furthermore, in the example described above, the present invention was applied to a case in which the moving vehicle MV had four driving wheels that could be driven independently of one another. By contrast, the present invention is not limited to a case in which the moving vehicle has four driving wheels; provided that the moving vehicle has a plurality of driving wheels that can be driven independently of one another, the present invention can be applied, and the position of the centroid of the moving vehicle can be estimated.

**Claims**

1. A centroid estimation device that estimates the centroid of a moving body having a plurality of driving wheels, comprising:

   a first acquisition part acquiring a mutual relationship information between the driving forces for said plurality of driving wheels, when the rotational speeds of said plurality of driving wheels become mutually equal; and
   a centroid estimation part configured to estimate the centroid of said moving body on the basis of the positional relationship of said plurality of driving wheels, and the mutual relationship information acquired by said first acquisition part.

2. The centroid estimation device according to Claim 1, further comprising:

   a torque control part configured to determine torque control values for said plurality of driving wheels, and to control torque amounts for said plurality of driving wheels on the basis of said torque control values that have been determined; wherein
   said torque control part determines the torque control values so that the rotational speeds of at least two of said plurality of driving wheels become equal, while keeping the total of the torque amounts for all of said plurality of driving wheels the same, during estimation of the centroid of said moving body.

3. The centroid estimation device according to Claim 2, further comprising:

   a driving force estimation part configured to estimate the driving forces for the driving wheels on the basis of said torque control values; wherein
   said first acquisition part acquires said mutual relationship information on the basis of the driving forces estimated by said driving force estimation part.

4. The centroid estimation device according to Claim 2, wherein, from among said plurality of driving wheels, said torque control part selects a pair of driving wheels whose rotational speeds are to be made equal, and determines torque control values so that the rotational speeds of the two driving wheels included in said selected driving wheel pair become equal to one another.

5. The centroid estimation device according to Claim 4, wherein said torque control part sequentially selects a plurality of driving wheel pairs whose rotational speeds are to be made mutually equal, and, for each of said plurality of pairs of driving wheels, determines torque control values so that the rotational speeds of said two driving wheels become equal to one another.

6. The centroid estimation device according to Claim 2, wherein said torque control part determines torque control values so that the rotational speeds of all of said plurality of driving wheels become equal to one another simultaneously.

7. The centroid estimation device according to Claim 1, further comprising:

   a second acquisition part acquiring running state information for said moving body; wherein
   said centroid estimation part estimates the centroid of said moving body in the longitudinal direction and in the transverse direction when, on the basis of the result acquired by said second acquisition part, said moving body is traveling at constant speed upon a flat road surface.

8. The centroid estimation device according to Claim 1, further comprising:

   a second acquisition part acquiring running state information for said moving body; wherein
   said centroid estimation part estimates the centroid of said moving body in the vertical direction on the basis of at least one of the angle of slope of the road surface upon which said moving body is traveling and the acceleration of said moving body, acquired by said second acquisition part.

9. A centroid estimation method that estimates the centroid of a moving body having a plurality of driving wheels, comprising the steps of:

   an acquisition process of acquiring a mutual relationship information between the driving forces for said plurality of driving wheels, when the rotational speeds of said plurality of driving wheels become mutually equal; and
   a centroid estimation process of estimating the centroid of said moving body on the basis of the positional relationship of said plurality of driving wheels, and the mutual relationship information acquired by said acquisition process.

10. A centroid estimation program, wherein it causes a calculation part to execute a centroid estimation method according to Claim 9.

11. A recording medium, wherein a centroid estimation program according to Claim 10 is recorded thereupon in a form that can be read by a calculation part.

# Fig. 1

# Fig. 2

# Fig. 3

# Fig. 4

# Fig. 5

# Fig. 6

EP 2 910 443 A1

Left Side Surface

MV

G

$WH_{FL}$, $WH_{FR}$

$WH_{RL}$, $WH_{RR}$

H

$W_{FL}+W_{FR}$

$W_{RL}+W_{RR}$

$L_F$

$L_R$

L

Make Moment Balancing Equation By Shifting Position At Which Forces Act From ⌄ Toward ⬇

# Fig. 7

MV

Front Surface

G

$WH_{FR}$, $WH_{RR}$

$WH_{FL}$, $WH_{RL}$

H

$W_{FR}+W_{RR}$

$W_{FL}+W_{RL}$

$Lt_R$

$Lt_L$

$Lt$

Make Moment Balancing Equation By Shifting Position At Which Forces Act From ⇣ Toward ⬇

EP 2 910 443 A1

# Fig. 8

Left Side Surface — MV

G

WH$_{FL}$, WH$_{FR}$

W$_{FL}$+W$_{FR}$

A

E
B C
F

D

WH$_{RL}$, WH$_{RR}$

H

L$_F$

L$_R$

L

W$_{RL}$+W$_{RR}$

$$BC = H \cdot \tan \theta$$
$$AE = AC \cdot \cos \theta = (AB + BC) \cdot \cos \theta = (L_F + BC) \cdot \cos \theta$$
$$DF = CD \cdot \cos \theta = (BD - BC) \cdot \cos \theta = (L_R - BC) \cdot \cos \theta$$

Make Moment Balancing Equation By Shifting Position

At Which Forces Act From ⇢ Toward ➡

# Fig. 9

Friction Coefficient ($\mu$)

# Fig. 10

Friction Coefficient ($\mu$)

# Fig. 11

Friction Coefficient ($\mu$)

Stable | Unstable

1

$(\lambda_A, \mu_A)$

$(\lambda_B, \mu_B)$

$\mu_A/\lambda_A \neq \mu_B/\lambda_B$

0

0 | 1

Slip Ratio ($\lambda$)

# Fig. 12

Friction Coefficient ($\mu$)

Unstable | Stable

0

$\mu_A/\lambda_A \neq \mu_B/\lambda_B$

$(\lambda_B, \mu_B)$

$(\lambda_A, \mu_A)$

-1

-1 | 0

Slip Ratio ($\lambda$)

# Fig. 13

# Fig. 14

# Fig. 15

Start

↓

S11

Processing to Estimate
Position of Centroid in
Longitudinal and Transverse
Directions

↓

S12

Vehicle Traveling at
Constant Speed on
Flat Road Surface ?

— N →

S13

Estimation of Centroid
Height Completed ?

— Y →

N

↓

S14

Centroid Height
Estimation Processing

Y

↓

S15

Slip Ratio
Estimation Processing

# Fig. 16

```
                Start                                          S11

                                    S22        Select Third Selected        S28
      Vehicle Traveling at                      Driving Wheel Pair
      Constant Speed on
 N    Flat Road Surface ?                                                    S29
              Y                                Processing for Driving Forces
                                    S22          when Rotational Speeds
      Select First Selected                         Become Equal
      Driving Wheel Pair
                                                                             S30
                                    S23              Driving Forces
     Processing for Driving Forces          N          Derived ?
        when Rotational Speeds
           Become Equal                                    Y                 S31

                                    S24       Estimate Centroid Position
          Driving Forces                         in Longitudinal and
 N           Derived ?                          Transverse Directions,
                                              and Normal Reaction Forces
              Y
                                    S25
      Select Second Selected                   Return Distribution of        S32
      Driving Wheel Pair                        Motor Torque Values
                                                    to Original
                                    S26
     Processing for Driving Forces                                           S33
        when Rotational Speeds                 Position of Centroid
           Become Equal                          Estimated ?           N

                                    S27                    Y
          Driving Forces
 N           Derived ?                              Return

              Y
```

# Fig. 17

S23,S26,S29

```
                    ┌─────────────┐
                    │    Start    │
                    └──────┬──────┘
                           │
                           ▼
              ┌────────────────────────┐  S41
              │  Acquire Current Torque │
              │   Distribution Ratios   │
              │       k₁ and k₂         │
              └───────────┬────────────┘
                          │
                          ▼
              ┌────────────────────────┐  S42
              │ Acquire Rotational Speeds│
              │  ω₁ and ω₂ of Selected  │
              │   Pair of Driving Wheels │
              └───────────┬────────────┘
```

Flowchart steps:

- Start
- S41: Acquire Current Torque Distribution Ratios $k_1$ and $k_2$
- S42: Acquire Rotational Speeds $\omega_1$ and $\omega_2$ of Selected Pair of Driving Wheels
- S43: $\omega_1 \doteqdot \omega_2$ ?
  - Y → S44: Acquire Driving Forces for Selected Pair of Driving Wheels
  - N → S45: $\omega_1 < \omega_2$ ?
    - Y → S46: $k_1 \leftarrow k_1 + \Delta k$; $k_2 \leftarrow k_2 - \Delta k$; $T_{m1} \leftarrow k_1 \cdot T_m$; $T_{m2} \leftarrow k_2 \cdot T_m$
    - N → S47: $k_1 \leftarrow k_1 - \Delta k$; $k_2 \leftarrow k_2 + \Delta k$; $T_{m1} \leftarrow k_1 \cdot T_m$; $T_{m2} \leftarrow k_2 \cdot T_m$
- S48: Acquire Rotational Speeds $\omega_1$ and $\omega_2$ of Selected Pair of Driving Wheels
- S49: Has $\omega_1$ or $\omega_2$ Greatly Changed ?
  - N → (return to before S43)
  - Y → Return
- Return

Fig. 18

# Fig. 19

```
                    ┌─────────┐                              S14
                    │  Start  │                       ↙  ╱
                    └────┬────┘                          
                         │                                      S59
                         ▼                    S51        ┌─────────────┐
         ┌──────/───────────────────\        N          │  Driving Forces
         │    /  | | > predetermined  \  ◄───────      /│   Derived ?  \
         │ N  \    value,             /              N \              /
         │     \ or                  /                   \           /
         │      \| :| > predetermined/                       │ Y
         │       \    value ?      /                         ▼
         │        \───────────────/                   ┌──────────────┐  S60
         │              │ Y          S52               │ Select Third Selected
         │              ▼                              │ Driving Wheel Pair
         │   /─────────────────────\                   └──────┬───────┘
         │  /  Ratios of Driving     \                        │         S61
         │ / N Forces during Travel   \                       ▼
         │ \   on Flat Road Surface   /            ┌────────────────────┐
         │  \  Calculated ?          /             │ Processing for Driving
         │   \─────────────────────/               │ Forces when Rotational
         │          │ Y                            │ Speeds Become Equal
         │          ▼               S53            └─────────┬──────────┘
         │   ┌──────────────┐                                │       S62
         │   │ Set Initial   │                               ▼
         │   │ Values        │              N     /─────────────────\
         │   └──────┬───────┘               ◄────/  Driving Forces   \
         │          │                            \   Derived ?       /
         │          ▼               S54           \─────────────────/
         │   ┌──────────────┐                            │ Y      S63
         │   │ Select First  │                           ▼
         │   │ Selected      │                   ┌────────────────────┐
         │   │ Driving Wheel │                   │ Estimate Centroid   │
         │   │ Pair          │  S55              │ Height and Normal   │
         │   └──────┬───────┘                    │ Reaction Forces     │
         │          ▼                            └─────────┬──────────┘
         │  ┌────────────────────┐                         │
         │  │ Processing for Driving                       ▼
         │  │ Forces when Rotational              ┌────────────────────┐  S64
         │  │ Speeds Become Equal                 │ Return Distribution │
         │  └─────────┬──────────┘                │ of Motor Torque     │
         │            │         S56               │ Values to Original  │
         │            ▼                           └─────────┬──────────┘
         │ N  /─────────────────\                           │        S65
         ◄───/  Driving Forces   \                          ▼
         │   \   Derived ?       /              /──────────────────\
         │    \─────────────────/               │ Height of Centroid │ N
         │          │ Y          S57            \   Estimated ?     /──┐
         │          ▼                            \────────────────/    │
         │   ┌──────────────┐                           │ Y            │
         │   │ Select Second │                          ▼              │
         │   │ Selected      │                    ┌─────────┐          │
         │   │ Driving Wheel │                    │ Return  │          │
         │   │ Pair          │  S58              └─────────┘          │
         │   └──────┬───────┘
         │          ▼
         │ ┌────────────────────┐
         │ │ Processing for Driving
         │ │ Forces when Rotational
         │ │ Speeds Become Equal
         │ └─────────┬──────────┘
         └───────────┘
```

<table>
<tr><td colspan="2" align="center">**INTERNATIONAL SEARCH REPORT**</td><td>International application No.<br>PCT/JP2012/076730</td></tr>
</table>

A.  CLASSIFICATION OF SUBJECT MATTER
*B60W40/13*(2012.01)i

According to International Patent Classification (IPC) or to both national classification and IPC

B.  FIELDS SEARCHED

Minimum documentation searched (classification system followed by classification symbols)
B60W40/13

Documentation searched other than minimum documentation to the extent that such documents are included in the fields searched
Jitsuyo Shinan Koho          1922-1996   Jitsuyo Shinan Toroku Koho   1996-2012
Kokai Jitsuyo Shinan Koho    1971-2012   Toroku Jitsuyo Shinan Koho   1994-2012

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X<br>Y | JP 2009-64190 A  (Yaskawa Electric Corp.),<br>26 March 2009 (26.03.2009),<br>paragraphs [0015] to [0018]<br>(Family: none) | 1-6,9-11<br>7-8 |
| Y | JP 5024457 B2  (Toyota Motor Corp.),<br>29 June 2012 (29.06.2012),<br>paragraph [0017]<br>(Family: none) | 7-8 |
| Y | JP 2011-207310 A  (Toyota Motor Corp.),<br>20 October 2011 (20.10.2011),<br>paragraph [0104]<br>(Family: none) | 7-8 |

☐  Further documents are listed in the continuation of Box C.        ☐  See patent family annex.

| | | |
|---|---|---|
| * | Special categories of cited documents: | "T"  later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X"  document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&"  document member of the same patent family |

| Date of the actual completion of the international search<br>    08 November, 2012 (08.11.12) | Date of mailing of the international search report<br>    20 November, 2012 (20.11.12) |
|---|---|
| Name and mailing address of the ISA/<br>    Japanese Patent Office | Authorized officer |
| Facsimile No. | Telephone No. |

Form PCT/ISA/210 (second sheet) (July 2009)

**EP 2 910 443 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006138800 A

- JP 2010051160 A